Europäisches Patentamt

European Patent Office

Office européen des brevets

(19)

(11) **EP 1 063 639 A1**

(12) **EUROPEAN PATENT APPLICATION**

(43) Date of publication:
**27.12.2000 Bulletin 2000/52**

(51) Int Cl.[7]: **G11B 5/712**, C09C 3/12,
C09C 1/00, C09C 3/10

(21) Application number: **00305310.5**

(22) Date of filing: **23.06.2000**

(84) Designated Contracting States:
**AT BE CH CY DE DK ES FI FR GB GR IE IT LI LU MC NL PT SE**
Designated Extension States:
**AL LT LV MK RO SI**

(30) Priority: **24.06.1999 JP 17834999**

(71) Applicant: **Toda Kogyo Corporation**
**Hiroshima-shi, Hiroshima-ken (JP)**

(72) Inventors:
• **Hayashi, Kazuyuki**
**Hiroshima-shi, Hiroshima-ken (JP)**

• **Ohsugi, Mineko**
**Hiroshima-shi, Hiroshima-ken (JP)**
• **Kamigaki, Mamoru**
**Kure-shi, Hiroshima-ken (JP)**
• **Morii, Hiroko**
**Hiroshima-shi, Hiroshima-ken (JP)**

(74) Representative: **Woods, Geoffrey Corlett**
**J.A. KEMP & CO.**
**Gray's Inn**
**14 South Square**
**London WC1R 5LX (GB)**

(54) **Magnetic composite particles for magnetic recording medium, process for producing the same and magnetic recording medium using the same**

(57) Magnetic composite particles suitable for use in a magnetic recording layer of magnetic recoding medium comprise:

(a) magnetic core particles having an average particle size of 0.01 to 0.3 μm; and
(b) from 0.1 to 20% by weight, based on the weight of said magnetic core particles, of inorganic particles which have an average particle size of 0.001 to 0.07 μm, which are fixed or anchored on the surface of each magnetic core particle through a silicon compound derivable from a tetraalkoxysilane and which comprise at least one inorganic compound selected from oxides, nitrides, carbides and sulfides containing aluminum, zirconium, cerium, titanium, silicon, boron or molybdenum.

EP 1 063 639 A1

**Description**

The present invention relates to magnetic composite particles for magnetic recording media, a process for producing the magnetic composite particles, and a magnetic recording medium using the magnetic composite particles, and more particularly, to magnetic composite particles being suitably used as a magnetic material in a magnetic recording layer of a magnetic recording medium having a high durability and an excellent magnetic head cleaning property, a process for producing the magnetic composite particles, and a magnetic recording medium using the above magnetic composite particles as a magnetic material for a magnetic recording layer thereof.

With the recent tendency toward miniaturization and weight reduction of video or audio magnetic recording and reproducing apparatuses as well as prolonged recording time of these apparatuses, magnetic recording media such as magnetic tapes or magnetic discs have been strongly required to have a high performance, namely high recording density, high durability, good electromagnetic performance or the like.

The magnetic recording media such as magnetic tapes or magnetic discs are contacted with a magnetic head upon recording and reproduction, so that a magnetic recording layer thereof tends to be abraded, resulting in contamination of the magnetic head as well as deterioration in recording and reproducing characteristics thereof. For this reason, it has been conventionally demanded to provide high-durability magnetic recording media having a high abrasion resistance and a high magnetic head cleaning property.

Hitherto, in order to enhance the abrasion resistance and magnetic head cleaning property of the magnetic recording layer of magnetic recording media, it has been attempted to incorporate various abrasives such as alumina ($Al_2O_3$), hematite ($\alpha$-$Fe_2O_3$) and dichromium trioxide ($Cr_2O_3$) in the magnetic recording layer.

However, these abrasives have many problems due to respective inherent defects thereof. For instance, it is known that alumina has a poor dispersibility in binder resins. Therefore, when the amount of alumina added to the magnetic recording layer increases, the surface smoothness of the obtained layer is considerably deteriorated. In contrast, hematite exhibits a relatively good dispersibility in binder resins. However, in order to obtain magnetic recording media having a sufficient durability, it is required to add a considerably large amount of hematite thereto, resulting in low filling percentage of magnetic particles and, therefore, poor electromagnetic performance. Further, the use of dichromium trioxide is undesirable from environmental and hygienic viewpoints.

Thus, it has been required to provide magnetic particles capable of not only producing magnetic recording media having a high durability even when being added in a small amount into the magnetic recording layer thereof, but also exhibiting a good polishing property.

Conventionally, various attempts have been made to improve properties of magnetic particles. For instance, there are known magnetic particles each having on the surface thereof a coating layer of an oxide or hydroxide of Al or Si (Japanese Patent Application Laid-Open (KOKAI) Nos. 62-89226(1987), 63-64305(1988), 64-50232(1989) and 4-141820(1992), etc.); and magnetic particles onto which fine particles of an Al or Si compound are adhered (Japanese Patent Publication (KOKOKU) Nos. 7-55828(1995), 7-55829(1995) and 7-55831(1995), Japanese Patent Application Laid-Open (KOKAI) No. 6-151139(1994), etc.).

Thus, at present, it has been most strongly demanded to provide magnetic particles being suitable for producing magnetic recording media having more excellent durability and magnetic head cleaning property. However, there have not been obtained magnetic particles capable of fulfilling the requirements.

Specifically, the magnetic particles each having on the surface thereof a coating layer of an oxide or hydroxide of Al or Si exhibit an improved dispersibility in binder resins. However, magnetic recording media produced by using these magnetic particles are still unsatisfactory in durability and magnetic head cleaning property.

Also, the magnetic particles onto which fine particles of an Al or Si compound are adhered, as described in Japanese Patent Publication (KOKOKU) Nos. 7-55828(1995), 7-55829(1995) and 7-55831(1995), are improved in dispersibility in binder resins. However, the fine particles are insufficiently bonded onto the surface of each magnetic particle and tends to be desorbed and fallen off therefrom. Therefore, magnetic recording media obtained by using these magnetic particles are still unsatisfactory in durability and magnetic head cleaning property, and fail to reduce the content of abrasives in the magnetic recording layer thereof.

Further, in Japanese Patent Application Laid-Open (KOKAI) No. 6-151139(1994), there is described a method of firmly adhering fine particles of an oxide or hydroxide of Al or Si onto the surface of each magnetic particle by first precipitating the fine particles on each magnetic particle and then subjecting the obtained magnetic particles to pulverization treatment. However, as described in Comparative Examples hereinafter, the magnetic particles undergo such a drawback that a considerable amount of the fine particles are desorbed or fallen-off therefrom upon use. Therefore, the magnetic recording media produced by using such magnetic particles cannot exhibit a sufficient magnetic head cleaning property, resulting in failing to reduce the content of abrasives in a magnetic recording layer thereof.

As a result of the present inventors' earnest studies for solving the above problems, it has been found that by mixing magnetic particles having an average particle size of 0.01 to 0.3 μm with inorganic fine particles having an average particle size of 0.001 to 0.07, and comprising at least one inorganic compound selected from the group consisting of oxides, nitrides, carbides and sulfides containing aluminum element, zirconium element, cerium element, titanium element, silicon element, boron element or molybdenum element, to adhere the inorganic fine particles onto the surface of each magnetic particle; adding tetraalkoxysilane to the obtained particles; and then heating the resultant mixture at a temperature of 40 to 200°C to fix or anchor the inorganic fine particles onto the surface of each magnetic particle through a silicon compound derived from the tetraalkoxysilane, the thus obtained magnetic composite particles exhibit an excellent dispersibility in vehicles and the fine inorganic particles firmly fixed onto the surface of each magnetic particle, so that a magnetic recording medium produced by using the magnetic composite particles is excellent in durability and magnetic head cleaning property. The present invention has been attained on the basis of this finding.

It is an object of the present invention to provide magnetic composite particles not only having an excellent dispersibility in vehicle, but also being capable of providing a magnetic recording medium exhibiting excellent durability and magnetic head cleaning property due to such a structure that inorganic fine particles are firmly fixed or anchored on the surfaces of magnetic particles.

In is an another object of the present invention to provide a magnetic recording medium exhibiting excellent durability and magnetic head cleaning property.

To accomplish the aim, in a first aspect of the present invention, there are provided magnetic composite particles comprising:

magnetic particles as core particles having an average particle size of 0.01 to 0.3 μm; and
inorganic fine particles having an average particle size of 0.001 to 0.07 μm, which are present on the surface of each magnetic, and comprise at least one inorganic compound selected from the group consisting of oxides, nitrides, carbides and sulfides containing aluminum element, zirconium element, cerium element, titanium element, silicon element, boron element or molybdenum element,
the inorganic fine particles being fixed or anchored on the surface of each magnetic particle through a silicon compound derived from tetraalkoxysilane and the amount of the inorganic fine particles being 0.1 to 20% by weight based on the weight of the magnetic particles.

In a second aspect of the present invention, there is provided a magnetic recording medium comprising:

a non-magnetic substrate; and
a magnetic recording layer formed on the non-magnetic substrate and comprising a binder resin and magnetic composite particles comprising:
magnetic particles as core particles having an average particle size of 0.01 to 0.3 μm, and
inorganic fine particles having an average particle size of 0.001 to 0.07 μm, which are present on the surface of each magnetic, and comprise at least one inorganic compound selected from the group consisting of oxides, nitrides, carbides and sulfides containing aluminum element, zirconium element, cerium element, titanium element, silicon element, boron element or molybdenum element,
the inorganic fine particles being fixed or anchored on the surface of each magnetic particle through a silicon compound derived from tetraalkoxysilane and the amount of the inorganic fine particles being 0.1 to 20% by weight based on the weight of the magnetic particles.

In a third aspect of the present invention, there is provided a process for producing the magnetic composite particles as defined in claim 1, comprising:

mixing magnetic particles having an average particle size of 0.01 to 0.3 μm with inorganic fine particles having an average particle size of 0.001 to 0.07, and comprising at least one inorganic compound selected from the group consisting of oxides, nitrides, carbides and sulfides containing aluminum element, zirconium element, cerium element, titanium element, silicon element, boron element or molybdenum element, to adhere the inorganic fine particles onto the surface of each magnetic particle;
adding tetraalkoxysilane to the resultant particles; and
heating the obtained mixture at a temperature of 40 to 200°C, thereby fixing or anchoring the inorganic fine particles onto the surface of each magnetic particle through a silicon compound derived from the tetraalkoxysilane.

The present invention will be described in detail below.

First, the magnetic composite particles according to the present invention is explained.

The magnetic composite particles of the present invention, comprise magnetic particles as core particles having an average particle size of 0.01 to 0.3 μm, and inorganic fine particles adhered onto the surface of each magnetic particle, which have an average particle size of 0.001 to 0.07, and comprise at least one inorganic compound selected from the group consisting of oxides, nitrides, carbides and sulfides containing aluminum element, zirconium element, cerium element, titanium element, silicon element, boron element or molybdenum element. The inorganic fine particles are firmly fixed or anchored onto the surface of each magnetic particle through a silicon compound derived from tetraalkoxysilane.

As the magnetic particles used as core particles of the magnetic composite particles according to the present invention, there may be exemplified acicular magnetic iron oxide particles such as maghemite particles, magnetite particles, berthollide compound particles as intermediate oxides between maghemite and magnetite; acicular magnetic iron oxide particles obtained by incorporating different kinds of elements other than Fe such as Co, Al, Ni, P, Zn, Si and B in the above acicular magnetic iron oxide particles; Co-coated acicular magnetic iron oxide particles obtained by modifying with Co onto the surfaces of the above acicular magnetic iron oxide particles; acicular magnetic metal particles containing iron as a main component; acicular magnetic iron alloy particles containing elements other than Fe such as Co, Al, Ni, P, Zn, Si, B and rare earth metals; plate-like magnetoplumbite-type ferrite particles containing Ba, Sr or Ba-Sr; or plate-like magnetoplumbite-type ferrite particles containing at least one coercive force-reducing agent selected from the group consisting of divalent and tetravalent metals such as Co, Ni, Zn, Mn, Mg, Ti, Sn, Zr, Nb, Cu and Mo.

In the consideration of the recent tendency toward high-density recording on magnetic recording media, as the magnetic particles, there may be suitably used the acicular magnetic metal particles containing iron as a main component and the acicular magnetic iron alloy particles containing elements other than Fe such as Co, Al, Ni, P, Zn, Si, B and rare earth metals.

The magnetic particles as core particles used in the present invention may have either an acicular shape or a plate-like shape. The "acicular" magnetic particles include "spindle-shaped" particles, "rice grain-shaped" particles and the like in addition to literally "needle-like" particles.

The magnetic particles as core particles have an average major axial diameter (an average particle size in the case of plate-like particles) of usually 0.01 to 0.30 $\mu$m, preferably 0.02 to 0.2 $\mu$m.

When the average major axial diameter or the average particle size of the magnetic particles as core particles is more than 0.3 $\mu$m, the obtained magnetic composite particles may become coarse. When such coarse particles are used to form a magnetic recording layer of magnetic recording medium, the obtained magnetic recording layer may be deteriorated in surface smoothness. When the average major axial diameter or the average particle size of the magnetic particles is less than 0.01 $\mu$m, the magnetic particles may become extremely fine, so that the agglomeration of the magnetic particles tends to occur due to the increased intermolecular force therebetween. As a result, it is difficult to uniformly adhere the inorganic fine particles onto the surface of each magnetic particle and evenly fix or anchor the inorganic fine particles thereonto through the silicon compound derived (produced) from tetraalkoxysilane.

When the magnetic particles as core particles used in the present invention have an acicular shape, the ratio of an average major axial diameter to an average minor axial diameter (hereinafter referred to merely as "aspect ratio") is usually 2:1 to 15:1, preferably 3:1 to 10:1.

When the aspect ratio of the acicular magnetic particles is more than 15:1, the magnetic particles tend to be entangled or intertwined with each other. As a result, it is difficult to uniformly adhere the inorganic fine particles onto the surface of each magnetic particle and evenly fix or anchor the inorganic fine particles thereonto through the silicon compound derived from tetraalkoxysilane. When the aspect ratio of the acicular magnetic particles is less than 2:1, the coating layer of the obtained magnetic recording medium may be deteriorated in strength.

When the magnetic particles as core particles used in the present invention have a plate-like shape, the ratio of an average plate surface diameter to an average thickness (hereinafter referred to merely as "plate ratio") thereof is usually 2:1 to 20:1, preferably 3:1 to 15:1.

When the plate ratio of the plate-like magnetic particles is more than 20:1, the particles tend to suffer from stacking. As a result, it is difficult to uniformly adhere the inorganic fine particles onto the surface of each magnetic particle and evenly fix or anchor the inorganic fine particles thereonto through the silicon compound derived (produced) from tetraalkoxysilane. When the plate ratio of the plate-like magnetic particles is less than 2:1, the coating layer of the obtained magnetic recording medium may be deteriorated in strength.

The magnetic particles as core particles used in the present invention have preferably a geometrical standard deviation of particle size of usually not more than 2.0, more preferably not more than 1.8, still more preferably not more than 1.6. When the geometrical standard deviation of particle size of the magnetic particles is more than 2.0, coarse particles may exist in the magnetic particles, thereby inhibiting the magnetic particles from being uniformly dispersed. As a result, it is difficult to uniformly adhere the inorganic fine particles onto the surface of each magnetic particle and evenly fix or anchor the inorganic fine particles thereonto through the silicon compound derived from tetraalkoxysilane. The lower limit of the geometrical standard deviation is usually 1.01. It is difficult to industrially produce magnetic particles having a geometrical standard deviation of particle size of less than 1.01.

The magnetic particles as core particles used in the present invention have a BET specific surface area of usually 15 to 150 $m^2$/g, preferably 20 to 120 $m^2$/g, more preferably 25 to 100 $m^2$/g. When the BET specific surface area value of the magnetic particles is less than 15 $m^2$/g, the magnetic particles may become too coarse or the sintering therebetween tends to be caused, resulting in the production of coarse magnetic composite particles. When such coarse magnetic composite particles are used to form a magnetic recording layer, the obtained coating layer may be deteriorated in surface smoothness. When the BET specific surface area value of the magnetic particles is more than 150 m$^2$/g, the magnetic particles may become extremely fine, so that the agglomeration of the particles tends to occur due to the increased intermolecular force therebetween. As a result, it is difficult to uniformly adhere the inorganic fine particles onto the surface of each magnetic particle and evenly fix or anchor the inorganic fine particles thereon through the silicon compound derived from tetraalkoxysilane.

The magnetic particles as core particles used in the present invention have a volume resistivity value of usually not more than $1.0 \times 10^9$ Ω·cm.

With respect to magnetic properties of the magnetic particles used in the present invention, (1) the acicular magnetic iron oxide particles have a coercive force value of preferably 250 to 500 Oe (19.9 to 39.8 kA/m), more preferably 300 to 500 Oe (23.9 to 39.8 kA/m), and a saturation magnetization value of preferably 60 to 90 emu/g (60 to 90 Am$^2$/kg), more preferably 65 to 90 emu/g (65 to 90 Am$^2$/kg); (2) the cobalt-coated acicular magnetic iron oxide particles have a coercive force value of preferably 500 to 1,700 Oe (39.8 to 135.3 kA/m), more preferably 550 to 1,700 Oe (43.8 to 135.3 kA/m), and a saturation magnetization value of preferably 60 to 90 emu/g (60 to 90 Am$^2$/kg), more preferably 65 to 90 emu/g (65 to 90 Am$^2$/kg); (3) the acicular magnetic metal particles containing iron as a main component and the acicular iron alloy particles have a coercive force value of preferably 800 to 3,500 Oe (63.7 to 278.5 kA/m), more preferably 900 to 3,500 Oe (71.6 to 278.5 kA/m), and a saturation magnetization value of preferably 90 to 170 emu/g (90 to 170 Am$^2$/kg), more preferably 100 to 170 emu/g (100 to 170 Am$^2$/kg); and (4) the plate-like magnetoplumbite-type ferrite particles have a coercive force value of preferably 500 to 4,000 Oe (39.8 to 318.3 kA/m), more preferably 650 to 4,000 Oe (51.7 to 318.3 kA/m), and a saturation magnetization value of preferably 40 to 70 emu/g (40 to 70 Am$^2$/kg), more preferably 45 to 70 emu/g (45 to 70 Am$^2$/kg).

The shape and size of the magnetic composite particles according to the present invention varies depending upon those of the magnetic particles as core particles, and are analogous thereto. The magnetic composite particles of the present invention maintain the substantially same magnetic properties as those of the core particles.

Specifically, the magnetic composite particles of the present invention have an average major axial diameter of usually 0.01 to 0.3 μm, preferably 0.02 to 0.2 μm.

When the average major axial diameter of the magnetic composite particles according to the present invention is more than 0.3 μm, the particle size become large, so that the magnetic recording layer formed by using the magnetic composite particles tends to have a deteriorated surface smoothness. When the average major axial diameter of the magnetic composite particles is less than 0.01 μm, the particles become extremely fine and tend to be agglomerated together due to the increased intermolecular force therebetween, resulting in poor dispersibility in vehicle upon the production of a magnetic coating composition.

The magnetic composite particles obtained by using the acicular magnetic particles as core particles have an aspect ratio of usually 2:1 to 15:1, preferably 3:1 to 10:1.

When the aspect ratio of the magnetic composite particles is more than 15:1, the particles tend to be entangled and intertwined with each other, sometimes resulting in poor dispersibility in vehicle upon the production of a magnetic coating composition and increased viscosity of the obtained magnetic coating composition. When the aspect ratio of the magnetic composite particles is less than 2:1, the magnetic recording layer of the magnetic recording medium may be deteriorated in strength.

The magnetic composite particles obtained by using the plate-like magnetic particles as core particles have a plate ratio of usually 2:1 to 20:1, preferably 3:1 to 15:1.

When the plate ratio of the plate-like magnetic composite particles is more than 20:1, the particles tend to suffer from stacking, resulting in poor dispersibility in vehicle upon the production of a magnetic coating composition and increased viscosity of the obtained magnetic coating composition. When the plate ratio of the plate-like magnetic composite particles is less than 2:1, the magnetic recording layer of the obtained magnetic recording medium may be deteriorated in strength.

The geometrical standard deviation of particle size of the magnetic composite particles according to the present invention is usually not more than 2.0. When the geometrical standard deviation is more than 2.0, a large amount of coarse particles may be present in the magnetic composite particles, thereby adversely affecting the surface smoothness of the magnetic recording layer formed on the magnetic recording medium. In the consideration of the surface smoothness of the obtained magnetic recording layer, the geometrical standard deviation of particle size of the magnetic composite particles is preferably not more than 1.8, more preferably not more than 1.6. Further, in the consideration of industrial productivity, the lower limit of the geometrical standard deviation is usually 1.01, because it is industrially difficult to produce magnetic composite particles having a geometrical standard deviation of particle size of less than 1.01.

The magnetic composite particles of the present invention have a BET specific surface area of usually 16 to 160 m$^2$/g, preferably 21 to 130 m$^2$/g, more preferably 26 to 110 m$^2$/g. When the BET specific surface area of the magnetic composite particles is less than 16 $m^2/g$, the magnetic composite particles become coarse or the sintering therebetween tends to be caused. The use of such coarse or sintered magnetic composite particles leads to deterioration in surface smoothness of the obtained magnetic recording layer. When the BET specific surface area of the magnetic composite particles is more than 160 $m^2/g$, the magnetic composite particles become extremely fine and tend to be agglomerated together due to the increased intermolecular force therebetween, resulting in poor dispersibility in vehicle upon the production of a magnetic coating composition.

The magnetic composite particles of the present invention have a volume resistivity value of usually not more than $1.0 \times 10^9$ $\Omega \cdot$cm, preferably $1.0 \times 10^4$ to $5.0 \times 10^8$ $\Omega \cdot$cm, more preferably $1.0 \times 10^4$ to $1.0 \times 10^8$ $\Omega \cdot$cm. When the volume resistivity value is more than $1.0 \times 10^9$ $\Omega \cdot$cm, it may be difficult to lower a surface resistivity value of the magnetic recording medium obtained therefrom.

With respect to magnetic properties of the magnetic composite particles of the present invention, the coercive force value thereof is usually 250 to 4,000 Oe (19.9 to 318.3 kA/m), and the saturation magnetization value thereof is usually 60 to 170 emu/g (60 to 170 $Am^2/kg$). More specifically, (1) the magnetic composite particles obtained by using the acicular magnetic iron oxide particles as core particles have a coercive force value of preferably 250 to 500 Oe (19.9 to 39.8 kA/m), more preferably 300 to 500 Oe (23.9 to 39.8 kA/m), and a saturation magnetization value of preferably 60 to 90 emu/g (60 to 90 $Am^2/kg$), more preferably 65 to 90 emu/g (65 to 90 $Am^2/kg$); (2) the magnetic composite particles obtained by using the Co-coated acicular magnetic iron oxide particles as core particles have a coercive force value of preferably 500 to 1,700 Oe (39.8 to 135.3 kA/m), more preferably 550 to 1,700 Oe (43.8 to 135.3 kA/m), and a saturation magnetization value of preferably 60 to 90 emu/g (60 to 90 $Am^2/kg$), more preferably 65 to 90 emu/g (65 to 90 $Am^2/kg$); (3) the magnetic composite particles obtained by using the acicular magnetic metal particles containing iron as a main component or the acicular iron alloy particles as core particles have a coercive force value of preferably 800 to 3,500 Oe (63.7 to 278.5 kA/m), more preferably 900 to 3,500 Oe (71.6 to 278.5 kA/m), and a saturation magnetization value of preferably 90 to 170 emu/g (90 to 170 $Am^2/kg$), more preferably 100 to 170 emu/g (100 to 170 $Am^2/kg$); and (4) the magnetic composite particles obtained by using the plate-like magnetoplumbite-type ferrite particles as core particles have a coercive force value of preferably 500 to 4,000 Oe (39.8 to 318.3 kA/m), more preferably 650 to 4,000 Oe (51.7 to 318.3 kA/m), and a saturation magnetization value of preferably 40 to 70 emu/g (40 to 70 $Am^2/kg$), more preferably 45 to 70 emu/g (45 to 70 $Am^2/kg$).

The percentage of the inorganic fine particles desorbed or fallen-off from the magnetic composite particles (desorption percentage) is usually not more than 15% by weight, preferably not more than 12% by weight, more preferably not more than 10% by weight based on the weight of the inorganic fine particles, when measured by the method as defined in Examples below. When the desorption percentage is more than 15% by weight, the inorganic fine particles desorbed tend to inhibit the magnetic composite particles from being uniformly dispersed in vehicle, and the obtained magnetic recording medium may fail to show a sufficient durability and magnetic head cleaning property.

The inorganic fine particles of the magnetic composite particles are at least one kind of fine particles composed of at least one inorganic compound selected from the group consisting of oxides, nitrides, carbides and sulfides containing aluminum element, zirconium element, cerium element, titanium element, silicon element, boron element or molybdenum element.

As the inorganic fine particles used in the present invention, there may be exemplified (a) oxide fine particles such as aluminum oxide fine particles, zirconium oxide fine particles, cerium oxide fine particles, titanium oxide fine particles, silicon oxide fine particles, molybdenum oxide fine particles or the like; (b) nitride fine particles such as aluminum nitride fine particles, titanium nitride fine particles, silicon nitride fine particles, zirconium nitride fine particles, molybdenum nitride fine particles, boron nitride fine particles or the like; (c) carbide fine particles such as aluminum carbide fine particles, silicon carbide fine particles, zirconium carbide fine particles, cerium carbide fine particles, titanium carbide fine particles, boron carbide fine particles, molybdenum carbide fine particles or the like; and (d) sulfide fine particles such as aluminum sulfide fine particles, zirconium sulfide fine particles, titanium sulfide fine particles, silicon sulfide fine particles, molybdenum disulfide fine particles or the like.

In the consideration of the magnetic head cleaning property of the obtained magnetic recording medium, it is preferred to use at least one fine particles selected from aluminum oxide fine particles, zirconium oxide fine particles, cerium oxide fine particles, aluminum nitride fine particles, titanium nitride fine particles, silicon nitride fine particles, zirconium nitride fine particles, boron nitride fine particles, silicon carbide fine particles, zirconium carbide fine particles, titanium carbide fine particles, boron carbide fine particles, molybdenum carbide fine particles.

The inorganic fine particles used in the present invention have an average particle size of usually 0.001 to 0.07 $\mu$m, preferably 0.002 to 0.05 $\mu$m.

When the average particle size of the inorganic fine particles is less than 0.001 $\mu$m, the particles become extremely fine, resulting in poor workability thereof. When the average particle size of the inorganic fine particles is more than 0.07 $\mu$m, the particle size of the inorganic fine particles is too large as compared to that of the magnetic particles as core particles, so that the adhesion of the inorganic fine particles onto the magnetic particles becomes insufficient.

The amount of the inorganic fine particles adhered onto the magnetic particles is usually 0.1 to 20% by weight based on the weight of the magnetic particles as core particles.

When the amount of the inorganic fine particles adhered is less than 0.1% by weight, it may be difficult to obtain magnetic composite particles showing a sufficient polishing effect, due to the too small amount of the inorganic fine particles adhered. On the contrary, when the amount of the inorganic fine particles adhered is more than 20% by weight, the obtained magnetic composite particles may show a sufficient polishing effect. However, since the amount of the inorganic fine particles adhered is too large, the inorganic fine particles tend to be desorbed or fallen-off from the surface of each magnetic particle, thereby failing to obtain magnetic recording media having an excellent durability and magnetic head cleaning property. The amount of the inorganic fine particles adhered onto the magnetic particles is preferably 0.15 to 15% by weight, more preferably 0.2 to 10% by weight based on the weight of the magnetic particles as core particles.

The silicon compound through which the inorganic fine particles are fixed or anchored onto the surface of each magnetic particle is produced by heat-treating tetraalkoxysilane represented by the following general formula:

$$SiX_4$$

wherein X represents -OR wherein R is $C_1$-$C_5$ alkyl group.

Examples of the tetraalkoxysilanes may include tetraethoxysilane, tetramethoxysilane or the like.

The coating amount of the silicon compound produced from tetraalkoxysilane is usually 0.01 to 5.0% by weight, preferably 0.02 to 4.0% by weight, more preferably 0.03 to 3.0% by weight (calculated as Si) based on the weight of the magnetic composite particles.

When the coating amount of the silicon compound is less than 0.01% by weight, the inorganic fine particles may not be sufficiently fixed or anchored onto the surface of each magnetic particle through the silicon compound derived therefrom and, therefore, tend to be desorbed therefrom, thereby failing to obtain magnetic recording media having an excellent durability and magnetic head cleaning property.

When the coating amount of the silicon compound is more than 5.0% by weight, the inorganic fine particles may be sufficiently fixed or anchored onto the surface of each magnetic particle. However, the content of the silicon compound derived from tetraalkoxysilane as a non-magnetic component is considerably increased, so that magnetic properties of the obtained magnetic composite particles may be adversely affected.

In the magnetic composite particles of the present invention, the magnetic particles as core particles may be previously coated with an undercoating material composed of at least one compound selected from the group consisting of a hydroxide of aluminum, an oxide of aluminum, a hydroxide of silicon and an oxide of silicon. The formation of such an undercoat is more advantageous to enhance the dispersibility of the magnetic composite particles in vehicle upon the production of a magnetic coating composition as compared to those having no undercoat.

The amount of the undercoat is preferably 0.01 to 20% by weight (calculated as Al, $SiO_2$ or a sum of Al and $SiO_2$) based on the weight of the magnetic particles coated with the undercoat.

When the covering amount of the undercoat is less than 0.01% by weight, it may be difficult to obtain the effect of improving a dispersibility in vehicle upon the production of a magnetic coating composition. On the contrary, when the amount of the undercoat is more than 20% by weight, the effect of improving the dispersibility in vehicle upon the production of a magnetic coating composition can be obtained. However, since the effect is already saturated, the use of such a too large amount of the undercoat is meaningless, and rather tends to adversely affect magnetic properties of the magnetic particles due to the increase in content of non-magnetic components.

The magnetic composite particles having the undercoat may have the substantially same particle size, geometrical standard deviation value, BET specific surface area value, magnetic properties and desorption percentage of inorganic fine particles as those having no undercoat.

Next, the magnetic recording medium according to the present invention will be described.

The magnetic recording medium according to the present invention comprises a non-magnetic substrate, and a magnetic recording layer which is formed on the non-magnetic substrate and comprising the magnetic composite particles and a binder resin.

As the non-magnetic substrate, there may be used those ordinarily used for magnetic recording media. Examples of the non-magnetic substrates may include films of synthetic resins such as polyethylene terephthalate, polyethylene, polypropylene, polycarbonates, polyethylene naphthalate, polyamides, polyamideimides and polyimides; foils or plates of metals such as aluminum and stainless steel; or various kinds of papers. The thickness of the non-magnetic substrate varies depending upon materials used, and is usually 1.0 to 300 μm, preferably 2.0 to 200 μm.

As the non-magnetic substrate for magnetic discs,, there may be generally used a polyethylene terephthalate film having a thickness of usually 50 to 300 μm, preferably 60 to 200 μm. As the non-magnetic substrate for magnetic tapes, there may be used a polyethylene terephthalate film having a thickness of usually 3 to 100 μm, preferably 4 to

20 µm, a polyethylene naphthalate film having a thickness of usually 3 to 50 µm, preferably 4 to 20 µm, or a polyamide film having a thickness of usually 2 to 10 µm, preferably 3 to 7 µm.

As the binder resins, there may also be used those presently ordinarily used for the production of magnetic recording media. Examples of the binder resins may include vinyl chloride-vinyl acetate copolymer resins, urethane resins, vinyl chloride-vinyl acetate-maleic acid copolymer resins, urethane elastomers, butadiene-acrylonitrile copolymer resins, polyvinyl butyral, cellulose derivatives such as nitrocellulose, polyester resins, synthetic rubber-based resins such as polybutadiene, epoxy resins, polyamide resins, polyisocyanates, electron beam-curable acrylic urethane resins, or mixtures thereof.

The respective binder resins may contain a functional group such as $-OH$, $-COOH$, $-SO_3M$, $-OPO_2M_2$ and $-NH_2$ wherein M represents H, Na or K. In the consideration of the dispersibility of the magnetic composite particles in vehicle upon the production of a magnetic coating composition, the use of such binder resins containing $-COOH$ or $-SO_3M$ as a functional group is preferred.

The thickness of the magnetic recording layer formed on the non-magnetic substrate is usually 0.01 to 5.0 µm. If the thickness is less than 0.01 µm, uniform coating may be difficult, so that unfavorable phenomenon such as unevenness on the coating surface may be observed. On the contrary, when the thickness of the magnetic recording layer is more than 5.0 µm, it may be difficult to obtain desired electromagnetic performance due to an influence of diamagnetism. The thickness of the magnetic recording layer is preferably 0.05 to 4.0 µm.

The amount of the magnetic composite particles in the magnetic recording layer is usually 5 to 2,000 parts by weight, preferably 100 to 1,000 parts by weight based on 100 parts by weight of the binder resin.

When the amount of the magnetic composite particles is less than 5 parts by weight, the magnetic composite particles may not be continuously dispersed in a coating layer due to the too small content in a magnetic coating composition, resulting in insufficient surface smoothness and strength of the obtained coating layer. When the amount of the magnetic composite particles is more than 2,000 parts by weight, the magnetic composite particles may not be uniformly dispersed in the magnetic coating composition due to the too large content as compared to that of the binder resin. As a result, when such a magnetic coating composition is coated onto the substrate, it is difficult to obtain a coating film having a sufficient surface smoothness. Further, since the magnetic composite particles cannot be sufficiently bonded together by the binder resin, the obtained coating film becomes brittle.

The magnetic recording layer may further contain various additives used in ordinary magnetic recording media such as lubricants, abrasives and anti-static agents in an amount of 0.1 to 50 parts by weight based on 100 parts by weight of the binder resin.

The magnetic recording medium of the present invention has a coercive force value of usually 250 to 4,000 Oe (19.9 to 318.3 kA/m), preferably 300 to 4,000 Oe (23.9 to 318.3 kA/m), a squareness (residual magnetic flux density Br/saturation magnetic flux density Bm) of usually 0.82 to 0.95, preferably 0.83 to 0.95; a gloss of coating film of usually 165 to 300%, preferably 170 to 300%; a surface roughness Ra of coating film of usually not more than 12.0 nm, preferably 2.0 to 11.5 nm, more preferably 2.0 to 11.0 nm; a Young's modulus of usually 124 to 160, preferably 126 to 160; a surface resistivity value of usually not more than $1.0 \times 10^{10}$ $\Omega/cm^2$, preferably not more than $9.0 \times 10^9$ $\Omega/cm^2$, more preferably not more than $8.0 \times 10^9$ $\Omega/cm^2$; a running durability of usually not less than 22 minutes, preferably not less than 24 minutes; and a magnetic head cleaning property of B or A, preferably A when evaluated by the four-rank evaluation method as described below.

When the magnetic recording medium is produced by using the magnetic composite particles having the undercoat on the surface of each magnetic particle as a core particle, the coercive force value thereof is usually 250 to 4,000 Oe (19.9 to 318.3 kA/m), preferably 300 to 4,000 Oe (23.9 to 318.3 kA/m); the squareness (residual magnetic flux density Br/saturation magnetic flux density Bm) thereof is usually 0.82 to 0.95, preferably 0.83 to 0.95; the gloss of coating film thereof is usually 170 to 300%, preferably 175 to 300%; the surface roughness Ra of coating film thereof is usually not more than 11.0 nm, preferably 2.0 to 10.5 nm, more preferably 2.0 to 10.0 nm; the Young's modulus thereof is usually 126 to 160, preferably 128 to 160; the surface resistivity value thereof is usually not more than $1.0 \times 10^{10}$ $\Omega/cm^2$, preferably not more than $9.0 \times 10^9$ $\Omega/cm^2$, more preferably not more than $8.0 \times 10^9$ $\Omega/cm^2$; the running durability thereof is usually not less than 23 minutes, preferably not less than 25 minutes; and the magnetic head cleaning property thereof is B or A, preferably A when evaluated by the four-rank evaluation method as described below.

In the consideration of high-density recording, the magnetic recording medium produced by using the magnetic composite particles comprising the acicular magnetic metal particles containing iron as a main component as core particles, has a coercive force value of usually 800 to 3,500 Oe (63.7 to 278.5 kA/m), preferably 900 to 3,500 Oe (71.6 to 278.5 kA/m), a squareness (residual magnetic flux density Br/saturation magnetic flux density Bm) of usually 0.85 to 0.95, preferably 0.86 to 0.95; a gloss of coating film of usually 190 to 300%, preferably 195 to 300%; a surface roughness Ra of coating film of usually not more than 10.0 nm, preferably 2.0 to 9.5 nm, more preferably 2.0 to 9.0 nm; a Young's modulus of usually 126 to 160, preferably 128 to 160; a surface resistivity value of usually not more than $1.0 \times 10^{10}$ $\Omega/cm^2$, preferably not more than $9.0 \times 10^9$ $\Omega/cm^2$, more preferably not more than $8.0 \times 10^9$ $\Omega/cm^2$; a running durability of usually not less than 24 minutes, preferably not less than 26 minutes; and a magnetic head cleaning property of B or A, preferably A when evaluated by the four-rank evaluation method as described below.

The magnetic recording medium produced by using the magnetic composite particles comprising the acicular magnetic metal particles containing iron as a main component as core particles which have the undercoat formed on the surface of each core particle, has a coercive force value of usually 800 to 3,500 Oe (63.7 to 278.5 kA/m), preferably 900 to 3,500 Oe (71.6 to 278.5 kA/m), a squareness (residual magnetic flux density Br/saturation magnetic flux density Bm) of usually 0.85 to 0.95, preferably 0.86 to 0.95; a gloss of coating film of usually 195 to 300%, preferably 200 to 300%; a surface roughness Ra of coating film of usually not more than 9.5 nm, preferably 2.0 to 9.0 nm, more preferably 2.0 to 8.5 nm; a Young's modulus of usually 128 to 160, preferably 130 to 160; a surface resistivity value of usually not more than $1.0 \times 10^{10}$ Ω/cm², preferably not more than $9.0 \times 10^9$ Ω/cm², more preferably not more than $8.0 \times 10^9$ Ω/cm²; a running durability of usually not less than 25 minutes, preferably not less than 27 minutes; and a magnetic head cleaning property of B or A, preferably A when evaluated by the four-rank evaluation method as described below.

Next, the process for producing the magnetic composite particles of the present invention will now be described.

The magnetic composite particles of the present invention can be produced by adhering the inorganic fine particles onto the surface of each magnetic particle as a core particle, adding tetraalkoxysilane to the magnetic particles on which the inorganic fine particles are adhered, and then heat-treating the resultant mixture.

The inorganic fine particles may be adhered onto the surface of each magnetic particle as a core particle by the following method. That is, the magnetic particles may be mechanically mixed and stirred with the inorganic fine particles composed of at least one inorganic compound selected from the group consisting of oxides, nitrides, carbides and sulfides containing aluminum element, zirconium element, cerium element, titanium element, silicon element, boron element or molybdenum element, or with an aqueous or alcoholic colloid solution containing the inorganic fine particles, and then the resultant mixture is dried. In the consideration of uniform adhesion of the inorganic fine particles onto the surface of each magnetic particle as a core particle, the mixing and stirring with the colloid solution containing the inorganic fine particles are preferred.

As the inorganic fine particles, there may be used either synthesized products or commercially available products.

As the colloid solution containing the inorganic fine particles, there may be exemplified a colloid solution containing fine particles composed of at least one inorganic compound selected from the group consisting of oxides, nitrides, carbides and sulfides containing aluminum element, zirconium element, cerium element, titanium element, silicon element, boron element or molybdenum element. For example, there may be exemplified a colloid solution containing aluminum oxide, zirconium oxide, cerium dioxide, titanium dioxide, silicon dioxide, aluminum nitride, silicon carbide and molybdenum disulfide.

As the colloid solution containing aluminum oxide fine particles, there may be used an alumina sol (produced by Nissan Kagaku Kogyo Co., Ltd.) or the like.

As the colloid solution containing zirconium oxide fine particles, there may be used NZS-20A, NZS-30A or NZS-30B (tradenames all produced by Nissan Kagaku Kogyo Co., Ltd.) or the like.

As the colloid solution containing cerium oxide fine particles, there may be used a ceria sol (produced by Nissan Kagaku Kogyo Co., Ltd.) or the like.

As the colloid solution containing titanium oxide fine particles, there may be used STS-01 or STS-02 (tradenames both produced by Ishihara Sangyo Co., Ltd.) or the like.

As the colloid solution containing silicon oxide fine particles, there may be used SNOWTEX-XS, SNOWTEX-S, SNOWTEX-UP, SNOWTEX-20, SNOWTEX-30, SNOWTEX-40, SNOWTEX-C, SNOWTEX-N, SNOWTEX-O, SNOWTEX-SS, SNOWTEX-20L or SNOWTEX-OL (tradenames, all produced by Nissan Kagaku Kogyo, Co., Ltd.) or the like.

The amount of the inorganic fine particles which are mechanically mixed and stirred therewith or the inorganic fine particles contained in the colloid solution is preferably 0.1 to 20 parts by weight (calculated as oxide, nitride, carbide or sulfide) based on 100 parts by weight of the magnetic particles as core particles. When the amount of the inorganic fine particles is less than 0.1 part by weight, the amount of the inorganic fine particles adhered onto the surface of each magnetic particle may be insufficient, so that the obtained magnetic composite particles may not show a sufficient polishing effect. When the amount of the inorganic fine particles is more than 20 parts by weight, the obtained magnetic composite particles exhibit a sufficient polishing effect. However, since the amount of the inorganic fine particles adhered onto the surface of each magnetic particle is too large, the inorganic fine particles tend to be desorbed or fallen-off from the surfaces of the magnetic particles, thereby failing to produce a magnetic recording medium having excellent durability and magnetic head cleaning property.

In order to uniformly adhere the inorganic fine particles onto the surface of each magnetic particle as a core particle, it is preferred that aggregated magnetic particles be previously deaggregated using a pulverizer.

As apparatus (a) for mixing and stirring the core particles with the inorganic fine particles to adhere onto the surface of each magnetic particles as core particles, and (b) for mixing and stirring tetraalkoxysilane with the particles whose the inorganic fine particles are adhered on the respective surfaces, there may be preferably used those apparatus capable of applying a shear force to the particles, more preferably those apparatuses capable of conducting the application of shear force, spaturate force and compressed force at the same time.

As such apparatuses, there may be exemplified wheel-type kneaders, ball-type kneaders, blade-type kneaders, roll-type kneaders or the like. Among them, wheel-type kneaders are preferred.

Specific examples of the wheel-type kneaders may include an edge runner (equal to a mix muller, a Simpson mill or a sand mill), a multi-mull, a Stotz mill, a wet pan mill, a Conner mill, a ring muller, or the like. Among them, an edge runner, a multi-mull, a Stotz mill, a wet pan mill and a ring muller are preferred, and an edge runner is more preferred.

Specific examples of the ball-type kneaders may include a vibrating mill or the like. Specific examples of the blade-type kneaders may include a Henschel mixer, a planetary mixer, a Nawter mixer or the like. Specific examples of the roll-type kneaders may include an extruder or the like.

After adhering the inorganic fine particles onto the surface of each magnetic particle as a core particle, tetraalkoxysilane is mixed and stirred therewith, and the resultant mixture is then heat-treated so as to fix or anchor the inorganic fine particles onto the magnetic particles through a silicon compound derived (produced) from the tetraalkoxysilane.

The conditions of the above mixing or stirring treatment may be appropriately controlled such that the linear load is usually 2 to 200 Kg/cm (19.6 to 1960 N/cm), preferably 10 to 150 Kg/cm (98 to 1470 N/cm), more preferably 15 to 100 Kg/cm (147 to 960 N/cm); and the treating time is usually 5 to 120 minutes, preferably 10 to 90 minutes. It is preferred to appropriately adjust the stirring speed in the range of usually 2 to 2,000 rpm, preferably 5 to 1,000 rpm, more preferably 10 to 800 rpm.

The amount of tetraalkoxysilane adhered is preferably 0.05 to 70 parts by weight based on 100 parts by weight of the magnetic particles as core particles. When the amount of tetraalkoxysilane adhered is less than 0.05 part by weight, it may be difficult to fix or anchor the inorganic fine particles onto the surface of each magnetic particle in an amount sufficient to exhibit a good polishing effect and improve a durability, upon subsequent heat-treatment of tetraalkoxysilane. When the amount of tetraalkoxysilane coated is more than 70 parts by weight, it is possible to fix or anchor a sufficient amount of the inorganic fine particles onto the surface of each magnetic particle. However, since the fixing or anchoring effect is already saturated, the use of such a too large coating amount of tetraalkoxysilane is meaningless.

The temperature of the heat-treatment of tetraalkoxysilane is usually 40 to 200°C, preferably 60 to 150°C. The heat-treating time is preferably from 10 minutes to 36 hours, more preferably from 30 minutes to 24 hours. Thus, when being heat-treated under the above conditions, tetraalkoxysilane is converted into a suitable silicon compound.

Meanwhile, when the readily oxidizable particles such as magnetite particles, acicular magnetic metal particles containing iron as a main component and acicular magnetic iron alloy particles are used as core particles, the mixer or stirrer is preferably purged with an inert gas such as $N_2$ before each treatment in order to prevent deterioration in magnetic properties thereof due to oxidation.

In particular, when the acicular magnetic metal particles containing iron as a main component or acicular magnetic iron alloy particles are heat-treated, a drier therefor is preferably purged with an inert gas such as $N_2$ before conducting the heat-treatment. Alternatively, the heat-treatment may be conducted under reduced pressure using a vacuum drier.

The magnetic particles as core particles may be previously coated with an undercoating material composed of at least one compound selected from the group consisting of a hydroxide of aluminum, an oxide of aluminum, a hydroxide of silicon and an oxide of silicon, prior to adhering the inorganic fine particles thereonto.

The formation of the undercoat may be conducted by adding an aluminum compound, a silicon compound or both aluminum and silicon compounds capable of forming the undercoat, to a water suspension prepared by dispersing the magnetic particles in water, mixing and stirring the resultant mixture, and further properly adjusting the pH value of the obtained mixture, if required, thereby coating the surface of each magnetic particle with at least one compound selected from the group consisting of a hydroxide of aluminum, an oxide of aluminum, a hydroxide of silicon and an oxide of silicon. The thus obtained mixture is filtered, washed with water, dried and then pulverized. If required, the obtained particles may be further subjected to deaeration, compaction or other treatments.

As the aluminum compounds used for forming the undercoat, there may be exemplified aluminum salts such as aluminum acetate, aluminum sulfate, aluminum chloride and aluminum nitrate; alkali aluminates such as sodium aluminate; or the like.

The amount of the aluminum compound added is usually 0.01 to 20% by weight (calculated as Al) based on the weight of the magnetic particles as core particles. When the amount of the aluminum compound added is less than 0.01% by weight, it may be difficult to obtain the effect of improving the dispersibility in vehicle upon the production of a magnetic coating composition. When the amount of the aluminum compound added is more than 20% by weight, the effect of improving the dispersibility in vehicle upon the production of a magnetic coating composition can be obtained. However, since the dispersibility-improving effect is already saturated, it is meaningless to coat the magnetic particles with such a too large amount of the aluminum compound.

As the silicon compound used for forming the undercoat, there may be exemplified water glass #3, sodium orthosilicate, sodium metasilicate or the like.

The amount of the silicon compound added is usually 0.01 to 20% by weight (calculated as $SiO_2$) based on the weight of the magnetic particles as core particles. When the amount of the silicon compound added is less than 0.01% by weight, it may be difficult to obtain the effect of improving the dispersibility in vehicle upon the production of a magnetic coating composition. When the amount of the silicon compound added is more than 20% by weight, the effect of improving the dispersibility in vehicle upon the production of a magnetic coating composition can be obtained. However, since the dispersibility-improving effect is already saturated, it is meaningless to coat the magnetic particles with such a too large amount of the silicon compound.

In the case where the aluminum and silicon compounds are used in combination, the total amount of the aluminum and silicon compounds coated is usually 0.01 to 20% by weight (calculated as a sum of Al and $SiO_2$) based on the weight of the magnetic particles as core particles.

Next, the process for producing the magnetic recording medium according to the present invention will be described.

The magnetic recording medium according to the present invention can be produced by applying a magnetic coating composition comprising the magnetic composite particles of the present invention, binder resin and solvent onto a non-magnetic substrate to form a coating film, and then drying the coating film to form a magnetic recording layer.

As the solvent, there may be used those generally used for the production of ordinary magnetic recording media. Examples of the solvents may include methyl ethyl ketone, toluene, cyclohexane, methyl isobutyl ketone, tetrahydrofuran or mixtures thereof.

The amount of the solvent or solvents used is 65 to 1,000 parts by weight in total based on 100 parts by weight of the magnetic composite particles. When the amount of the solvent used is less than 65 parts by weight, the obtained magnetic coating composition may exhibit a too high viscosity, resulting in poor coatability thereof. When the amount of the solvent used is more than 1,000 parts by weight, a too large amount of the solvent may be volatilized upon coating which is disadvantageous from industrial viewpoints.

The important point of the present invention is that when magnetic composite particles obtained by adhering inorganic fine particles of at least one inorganic compound selected from the group consisting of oxides, nitrides, carbides and sulfides containing aluminum element, zirconium element, cerium element, titanium element, silicon element, boron element or molybdenum element, onto the surface of each magnetic particle as a core particle, and firmly fixing or anchoring the inorganic fine particles thereonto through a silicon compound derived (produced) from tetraalkoxysilane are used for the production of a magnetic recording medium, the obtained magnetic recording medium exhibits excellent durability and magnetic head cleaning property.

The reason why a magnetic recording medium produced by using the magnetic composite particles of the present invention is excellent in durability and magnetic head cleaning property, is as follow. That is, since the inorganic fine particles such as oxide fine particles, nitride fine particles or carbide fine particles having high Mohs' hardness, or sulfide fine particles as a solid lubricant, not only are adhered onto the surface of each magnetic particle as core particles, but also are firmly fixed or anchored thereonto through the silicon compound derived from tetraalkoxysilane, the obtained magnetic composite particles maintain a high polishing property and the inorganic fine particles are more effectively prevented from being desorbed or fallen-off from the surface of each magnetic particle.

Meanwhile, the reason why the inorganic fine particles are firmly fixed or anchored onto the surface of each magnetic particle, is considered as follows. That is, it is known that tetraalkoxysilane is readily hydrolyzed in the presence of water to produce silicon dioxide. In the present invention, the tetraalkoxysilane adhered is hydrolyzed by the interaction with a hydroxyl group derived from water absorbed on the surface of each magnetic particle and a hydroxyl group derived from water absorbed on the surfaces of the inorganic fine particles adhered onto the surface of each magnetic particle. Further, when the obtained particles are subjected to heat-dehydration, the inorganic fine particles are firmly fixed or anchored on the surface of each magnetic particle by the anchoring effect of the silicon compound derived from tetraalkoxysilane.

When the magnetic composite particles of the present invention are used as magnetic particles for magnetic recording media, the obtained magnetic recording media exhibit excellent durability and magnetic head cleaning property. Therefore, the magnetic composite particles of the present invention are suitable as magnetic particles for high-density magnetic recording media.

The magnetic recording medium of the present invention exhibits not only excellent durability and magnetic head cleaning property, but also a high filling percentage of magnetic particles in a magnetic recording layer thereof due to a reduced content of abrasives, and as a result, the magnetic recording medium of the present invention has a high electromagnetic performance. Therefore, the magnetic recording medium of the present invention is suitable for high-density recording.

## EXAMPLES

The present invention is described in more detail by Examples and Comparative Examples, but the Examples are only illustrative and, therefore, not intended to limit the scope of the present invention.

Various properties were measured by the following methods.

(1) The average major axial diameter and average minor axial diameter of particles are respectively expressed by the average value obtained by measuring about 350 particles which were sampled from a micrograph obtained by magnifying an original electron micrograph ($\times$ 30,000) by four times in each of longitudinal and transverse directions.

(2) The aspect ratio is expressed by the ratio of average major axial diameter to average minor axial diameter. The plate ratio is expressed by the ratio of average particle size to average thickness.

(3) The particle size distribution of major axial diameters or particle sizes (hereinafter referred to merely as "particle size") is expressed by the geometrical standard deviation thereof obtained by the following method.

That is, the particle sizes were measured from the above magnified electron micrograph. The actual particle sizes and the number of the particles were calculated from the measured values. On a logarithmic normal probability paper, the particle sizes were plotted at regular intervals on the abscissa-axis and the accumulative number (under integration sieve) of particles belonging to each interval of the particle sizes were plotted by percentage on the ordinate-axis by a statistical technique.

The particle sizes corresponding to the number of particles of 50% and 84.13%, respectively, were read from the graph, and the geometrical standard deviation was calculated from the following formula:

Geometrical standard deviation =

{particle size corresponding to 84.13% under

integration sieve}/{particle size (geometrical

average diameter) corresponding to 50% under

integration sieve}

The closer to 1 the geometrical standard deviation value, the more excellent the particle size distribution.

(4) The specific surface area is expressed by the value measured by a BET method.

(5) The amounts of Al, Si and Co of the coating layer formed onto the surface of each magnetic particle, the amounts of Al, Zr, Ce, Ti, Si, B and Mo of inorganic fine particles existing on the surface of each magnetic particle, and the amount of Si of a silicon compound derived from tetraalkoxysilane were respectively measured by a fluorescent X-ray spectroscopy device "3063M Model" (manufactured by Rigaku Denki Kogyo Co., Ltd.) according to JIS K0119 "General Rule of Fluorescent X-ray Analysis".

The amount of Si of an oxide of silicon or a hydroxide of silicon coated or existing on the surface of each magnetic particle, the amount of Si of silicon oxide fine particles, and the amount of Si of a silicon compound derived from tetraalkoxysilane, are expressed by a value obtained by subtracting the amount of Si measured before each treatment from that measured after the treatment. The amount of Al of a hydroxide of aluminum or an oxide of aluminum coated or existing on the surface of each magnetic particle and the amount of Al of aluminum oxide fine particles, are expressed by a value obtained by the same method as used in the above measurement of Si.

(6) The desorption percentage (%) of inorganic fine particles adhered onto the magnetic composite particles is expressed by a value measured using the following method. The closer to zero the desorption percentage, the smaller the amount of the inorganic fine particles desorbed or fallen-off from the surface of each magnetic composite particle.

3 g of the magnetic composite particles and 40 ml of ethanol were placed in a 50ml-precipitation pipe, and then subjected to ultrasonic dispersion for 20 minutes. Thereafter, the obtained dispersion was allowed to stand for 120 minutes, and the inorganic fine particles desorbed were separated from the magnetic composite particles by the difference in precipitation speed between both the particles. Next, the magnetic composite particles separated from the inorganic fine particles desorbed were mixed again with 40 ml of ethanol, and the obtained mixture was subjected to ultrasonic dispersion for 20 minutes. Then, the obtained dispersion was allowed to stand for 120 minutes, thereby separating the magnetic composite particles and the desorbed fined particles from each other. After the thus obtained magnetic composite particles were dried at 80°C for one hour, the contents of Al, Zr, Ce, Ti Si, B and Mo therein were measured by a fluorescent X-ray spectroscopy device "3063M Model" (manufactured by Rigaku Denki Kogyo Co., Ltd.) according to JIS K0119 "General Rule of Fluorescent X-ray Analysis". The desorption percentage of the inorganic fine particles is calculated according to the following formula:

Desorption percentage of

inorganic fine particles (%) = {(Wa - We)/Wa} x 100

wherein Wa represents an amount of the inorganic fine particles initially adhered onto the magnetic composite particles; and We represents an amount of the inorganic fine particles still adhered on the magnetic composite particles after the desorption test.

(7) The content of $Fe^{2+}$ in magnetite particles is expressed by the value measured by the following chemical analysis method.

25 ml of a mixed solution containing phosphoric acid and sulfuric acid at a mixing ratio of 2:1 was added to 0.5 g of magnetite particles in an inert gas atmosphere to dissolve the magnetite particles in the mixed solution. After adding several droplets of diphenylamine sulfonic acid as an indicator to the solution, the resultant solution was subjected to oxidation-reduction titration using an aqueous potassium bichromate solution. The titration was terminated when the solution exhibited a violet color. The amount of $Fe^{2+}$ was measured from the amount of the potassium bichromate solution used until reaching termination of the titration.

(8) The volume resistivity of the magnetic particles and the magnetic composite particles was measured by the following method.

That is, first, 0.5 g of a sample particles to be measured was weighted, and press-molded at 140 $Kg/cm^2$ (1.37 $\times 10^7$ Pa) using a KBr tablet machine (manufactured by Simazu Seisakusho Co., Ltd.), thereby forming a cylindrical test piece.

Next, the thus obtained cylindrical test piece was exposed to an atmosphere maintained at a temperature of 25°C and a relative humidity of 60 % for 12 hours. Thereafter, the cylindrical test piece was set between stainless steel electrodes, and a voltage of 15V was applied between the electrodes using a Wheatstone bridge (model 4329A, manufactured by Yokogawa-Hokushin Denki Co., Ltd.) to measure a resistance value R ($\Omega$).

The cylindrical test piece was measured with respect to an upper surface area A ($cm^2$) and a thickness $t_0$ (cm) thereof. The measured values were inserted into the following formula, thereby obtaining a volume resistivity X ($\Omega \cdot cm$).

$$X (\Omega \cdot cm) = R \times (A/t_0)$$

(9) The magnetic properties of magnetic particles were measured using a vibration sample magnetometer "VSM-3S-15" (manufactured by Toei Kogyo Co., Ltd.) by applying an external magnetic field of 10 kOe (795.8 kA/m) (or 5 kOe (397.9 kA/m) in the case of magnetic iron oxide particles). Also, the magnetic properties of magnetic recording medium were measured using the same apparatus by applying an external magnetic field of 10 kOe (795.8 kA/m) (or 5 kOe (397.9 kA/m) in the case where magnetic iron oxide particles or Co-coated magnetic iron oxide particles were used as core particles of magnetic composite particles).

(10) The viscosity of a magnetic coating composition was measured at 25°C by E-type viscometer "EMD-R" (manufactured by Tokyo Keiki Co., Ltd.), and expressed by the value at a shear rate (D) of 1.92 $sec^{-1}$.

(11) The gloss of a coating film was measured by irradiating light thereon at an incident angle of 45° using a gloss meter "UGV-5D" (manufactured by Suga Testing Machine Manufacturing Co., Ltd.), and expressed by the percentage (%) based on a reference plate assuming that the gloss of the reference plate measured under the same conditions is 86.3%.

(12) The surface roughness Ra of a coating film is expressed by a center line average roughness value thereof measured by "Surfcom-575A" (manufactured by Tokyo Seimitsu Co., Ltd.).

(13) The running durability of a magnetic recording medium is expressed by an actual operating time measured under a load of 200 gw (1.96 N) at a relative speed between head and tape of 16 m/s by a Media Durability Tester "MDT-3000" (manufactured by Steinberg Associates Corp.). The longer the actual operating time, the more excellent the running durability.

(14) The magnetic head cleaning property of a magnetic recording medium was determined by visually observing the degree of contamination on the magnetic head after the magnetic tape was run under a load of 200 gw (1.96 N) at a relative speed between head and tape of 16 m/s for 30 minutes. The results of the observation was classified into the following four ranks. The less the contamination on the magnetic head, the higher the magnetic head cleaning property.

> A: No contamination on head;
> B: Slight contamination on head;
> C: Some contamination on head; and
> D: Considerable contamination on head.

(15) The strength of a coating film was determined by measuring the Young's modulus thereof using "Autograph" (manufactured by Shimadzu Seisakusho Co., Ltd.). The Young's modulus is expressed by a relative value based on that of a commercially available video tape "AV T-120" (produced by Victor Company of Japan, Limited). The larger the relative value, the higher the strength of the coating film.

(16) The surface resistivity of the coating film of the magnetic recording layer was measured by the following method. That is, the coating film to be measured was exposed to the environment maintained at a temperature of 25°C and a relative humidity of 60 %, for not less than 12 hours. Thereafter, the coating film was slit into 6 mm width, and the slit coating film was placed on two metal electrodes having a width of 6.5 mm such that a coating surface thereof was contacted with the electrodes. 170-gram weights were respectively suspended at opposite ends of the coating film so as to bring the coating film into close contact with the electrodes. D.C. 500 V was applied between the electrodes, thereby measuring the surface resistivity of the coating film.

(17) The thicknesses of non-magnetic substrate and magnetic recording layer of a magnetic recording medium were measured by the following method.

The thickness (A) of the non-magnetic substrate was first measured by a digital electron micrometer "K351C" (manufactured by Anritsu Denki Co., Ltd.). After forming a magnetic recording layer on the non-magnetic substrate, a thickness (B) of the thus obtained magnetic recording medium (a total thickness of the non-magnetic substrate and the magnetic recording layer) was measured by the same method as used above. Then, the thickness of the magnetic recording layer is obtained by subtracting (A) from (B).

Example 1:

<Production of magnetic composite particles>

11.0 kg of acicular magnetic metal particles containing iron as a main component (average major axial diameter: 0.130 $\mu$m; average minor axial diameter: 0.0186 $\mu$m; aspect ratio: 7.0:1; geometrical standard deviation: 1.38; BET specific surface area: 51.8 m$^2$/g; volume resistivity value : 7.2 $\times$ 10$^5$ $\Omega$·cm; coercive force value: 1,710 Oe (136.1 kA/m); saturation magnetization value: 135.6 emu/g (135.6 Am$^2$/kg)) were charged into an edge runner "MPUV-2 Model" (manufactured by Matsumoto Chuzo Tekkosho Co., Ltd.). While introducing a nitrogen gas through the edge runner, the particles were mixed and stirred at a linear load of 20 Kg/cm (196 N/cm) for 20 minutes to lightly deaggregate the particles.

Then, 1,100 g of a ceria sol containing cerium oxide fine particles having an average particle size of 0.01 $\mu$m (CeO$_2$ content: 20% by weight; produced by Nissan Kagaku Kogyo Co., Ltd.) was added to the deaggregated acicular magnetic metal particles containing iron as a main component while operating the edge runner, and the resultant mixture was continuously mixed and stirred at a linear load of 20 Kg/cm (196 N/cm) and a stirring speed of 22 rpm for 20 minutes to adhere the cerium oxide fine particles onto the surface of each acicular magnetic metal particle. As a result of fluorescent X-ray analysis of the thus obtained acicular magnetic metal particles, it was confirmed that the content of the cerium oxide fine particles was 1.92% by weight (calculated as CeO$_2$) based on the total weight of the acicular magnetic metal particles containing iron as a main component and the cerium oxide fine particles adhered thereon.

Further, as a result of the observation by an electron microscope, it was confirmed that no cerium oxide fine particles were present in an isolated state. This indicates that a substantially whole amount of the cerium oxide fine particles added were adhered on the surface of each acicular magnetic metal particle containing iron as a main component.

Next, 110 g of tetraethoxysilane "KBE 04" (tradename, produced by Shin-Etsu Kagaku Co., Ltd.) was added to the obtained particles for 10 minutes while operating the edge runner, and the resultant mixture was mixed and stirred therein at a linear load of 20 Kg/cm (196 N/cm) and a stirring speed of 22 rpm for 20 minutes, thereby adhering tetraethoxysilane on the surface of each acicular magnetic metal particle containing iron as a main component on which the cerium oxide fine particles were adhered.

The thus obtained acicular magnetic metal particles containing iron as a main component were heat-treated at 40°C under a pressure of 10 Torr (1333.22 Pa) for 24 hours using a vacuum drier, thereby fixing or anchoring the cerium oxide fine particles onto the surface of each acicular magnetic metal particle containing iron as a main component through a silicon compound produced from tetraethoxysilane, and simultaneously volatilizing residual ethanol and water produced by hydrolysis of tetraethoxysilane or the like. As a result of observation of the thus obtained acicular magnetic metal composite particles containing iron as a main component by an electron microscope, it was confirmed that no cerium oxide fine particles remained isolated after the fixing or anchoring treatment with the silicon compound produced from tetraethoxysilane. This indicates that a substantially whole amount of the cerium oxide fine particles added were fixed or anchored on the surface of each acicular magnetic metal particle containing iron as a main component.

The obtained acicular magnetic metal composite particles containing iron as a main component had an average major axial diameter of 0.131 $\mu$m, an average minor axial diameter of 0.0187 $\mu$m, an aspect ratio of 7.0:1, a geometrical standard deviation of major axial diameter of 1.39, a BET specific surface area of 52.5 $m^2$/g, a volume resistivity value : 7.3 $\times$ $10^6$ $\Omega \cdot$cm, desorption percentage of inorganic fine particles of 6.3 %, a coercive force value of 1,698 Oe (135.1 kA/m) and a saturation magnetization value of 129.8 emu/g (129.8 $Am^2$/kg). As a result of fluorescent X-ray analysis of the obtained particles, it was confirmed that the amount of the silicon compound produced from tetraethoxysilane was 0.130% by weight (calculated as Si) based on the weight of the acicular magnetic metal composite particles containing iron as a main component.

Example 2:

<Production of magnetic recording medium>

100 parts by weight of the above-prepared acicular magnetic metal composite particles containing iron as a main component, 10.0 parts by weight of a vinyl chloride-vinyl acetate copolymer resin (tradename: MR-110, produced by Nippon Zeon Co., Ltd.), 23.3 parts by weight of cyclohexanone, 10.0 parts by weight of methyl ethyl ketone, 1.0 part by weight of carbon black particles (produced by Mitsubishi Chemical Corp., average particle size: 26 nm; BET specific surface area: 130 $m^2$/g) and 7.0 parts by weight of alumina particles "AKP-30" (tradename, produced by Sumitomo Kagaku Co., Ltd., average particle size: 0.4 $\mu$m) were kneaded together for 20 minutes using a kneader. The obtained kneaded material was diluted by adding 79.6 parts by weight of toluene, 110.2 parts by weight of methyl ethyl ketone and 17.8 parts by weight of cyclohexanone thereto, and then the resultant mixture was mixed and dispersed for 3 hours by a sand grinder, thereby obtaining a dispersion.

The obtained dispersion was mixed with 33.3 parts by weight of a solution prepared by dissolving 10.0 parts by weight (solid content) of a polyurethane resin (tradename: E-900, produced by Takeda Yakuhin Kogyo Co., Ltd.) in a mixed solvent containing methyl ethyl ketone and toluene at a mixing ratio of 1:1, and the resultant mixture was mixed and dispersed for 30 minutes by a sand grinder. Thereafter, the obtained dispersion was passed through a filter having a mesh size of 1 $\mu$m. The obtained filter cake was mixed under stirring with 12.1 parts by weight of a solution prepared by dissolving 1.0 part by weight of myristic acid and 3.0 parts by weight of butyl stearate in a mixed solvent containing methyl ethyl ketone, toluene and cyclohexanone at a mixing ratio (weight) of 5:3:2, and with 15.2 parts by weight of a solution prepared by dissolving 5.0 parts by weight of trifunctional low molecular weight polyisocyanate (tradename: E-31, produced by Takeda Yakuhin Kogyo Co., Ltd.) in a mixed solvent containing methyl ethyl ketone, toluene and cyclohexanone at a mixing ratio (weight) of 5:3:2, thereby producing a magnetic coating composition.

The obtained magnetic coating composition contained the following components :

| | |
|---|---|
| Acicular magnetic metal composite particles containing iron as a main component | 100 weight parts |
| Vinyl chloride-vinyl acetate copolymer resin | 10 weight parts |
| Polyurethane resin | 10 weight parts |
| Alumina particles | 7.0 weight parts |
| Carbon black fine particles | 1.0 weight part |
| Myristic acid | 1.0 weight part |
| Butyl stearate | 3.0 weight parts |
| Trifunctional low molecular weight polyisocyanate | 5.0 weight parts |
| Cyclohexanone | 56.6 weight parts |
| Methyl ethyl ketone | 141.5 weight parts |
| Toluene | 85.4 weight parts |

The obtained magnetic coating composition had a viscosity of 5,760 cP.

The thus obtained magnetic coating composition was passed through a filter having a mesh size of 1 $\mu$m.

Thereafter, the magnetic coating composition was coated on a 12 μm-thick polyester base film using a slit coater having a gap width of 45 μm and then dried, thereby forming a magnetic layer on the base film. The surface of the obtained magnetic recording layer was calendered and smoothened by an ordinary method, and then the film was cut into a width of 1/2 inch (1.27 cm). The obtained tape was allowed to stand in a curing oven maintained at 60°C, for 24 hours to sufficiently cure the magnetic recording layer therein, thereby producing a magnetic tape. The obtained coating layer had a thickness of 3.5 μm.

With respect to magnetic properties of the obtained magnetic tape, the coercive force value thereof was 1,723 Oe (137.1 kA/m); the squareness (Br/Bm) thereof was 0.88; the gloss thereof was 232%; the surface roughness (Ra) thereof was 6.9 nm; the Young's modulus thereof was 139; the surface resistivity value thereof was $3.6 \times 10^9$ $\Omega/cm^2$, the running durability thereof was 27.8 minutes; and the magnetic head cleaning property thereof was A.

Core particles 1 to 3:

As core particles, magnetic particles having properties as shown in Table 1 were prepared.

Core particles 4:

<Forming undercoat on the surface of magnetic particles >

An aqueous sodium hydroxide solution was added to 150 liters of pure water so as to adjust the pH value thereof to 11.0. 20 kg of acicular magnetic metal particles containing iron as a main component (Core particles 1) were added to the water, deaggregated by a stirrer, and then passed through a Homomic-Line Mill (manufactured by Tokushu Kika Kogyo Co., Ltd.) three times, thereby obtaining a slurry of the acicular magnetic metal particles containing iron as a main component.

The obtained slurry was mixed with water so as to adjust the concentration thereof to 98 g/liter. 150 liters of the diluted slurry was heated to 60°C while stirring.

5,444 milliliters of a 1.0-mol/liter sodium aluminate aqueous solution (corresponding to 1.0% by weight (calculated as Al) based on the weight of the acicular magnetic metal particles containing iron as a main component) were added to the slurry. The slurry was allowed to stand for 30 minutes and then mixed with acetic acid so as to adjust the pH value thereof to 8.5.

After being kept under the above condition for 30 minutes, the resultant slurry was filtered, washed with water, dried while purging with $N_2$ gas, and then pulverized, thereby obtaining the acicular magnetic metal particles containing iron as a main component which were surface-coated with a hydroxide of aluminum.

Main production conditions are shown in Table 2, and various properties of the obtained acicular magnetic metal particles containing iron as a main component are shown in Table 3.

Core particles 5 and 6:

The same production procedure of the Core particles 4 as defined above was conducted except that kind of core particles and kind and amount of additives added were varied, thereby obtaining Core particles 5 and 6.

Main production conditions are shown in Table 2, and various properties of the obtained Core particles are shown in Table 3. In "kind of coating material" of Table 2, A and S represent a hydroxide of aluminum and an oxide of silicon, respectively.

Inorganic fine particles:

Inorganic fine particles having properties as shown in Table 4 were prepared.

Examples 3 to 20 and Comparative Examples 1 to 5 and 7 to 9:

The same procedure as defined in Example 1 was conducted except that kind of core particles, kind and amount of inorganic fine particles, linear load and time of edge runner treatment used in the fine particle-adhering step, kind and amount of tetraalkoxysilane, and linear load and time of edge runner treatment used in the tetraalkoxysilane-coating step were changed variously, thereby obtaining magnetic composite particles.

Main production conditions are shown in Tables 5 and 7, and various properties of the obtained magnetic composite particles are shown in Tables 6 and 8.

Comparative Example 6 (follow-up test of Japanese Patent Application Laid-Open (KOKAI) No. 6-151139(1994)):

6.0 kg of the Co-coated maghemite particles as Core particles 3 was mixed and stirred in water, and then 1,000 ml of a 0.1-mol/liter sodium hydroxide aqueous solution was added to the resultant mixture, thereby obtaining a suspension having a pH value of 11.4.

After intimately mixing and stirring the obtained suspension, 2,200 ml of a 0.5-mol/liter sodium aluminate aqueous solution (corresponding to 0.5% by weight (calculated as Al) based on the weight of the Co-coated maghemite particles) was added thereto, and the resultant mixture was further mixed and stirred.

Then, the obtained suspension was mixed with a 0.1-mol/liter HCl aqueous solution while stirring so as to adjust the pH value thereof to 7.0. Immediately after the mixing was continued for 8 minutes, the obtained slurry was filtered, washed with water and then dried by an ordinary method, thereby obtaining magnetic particles.

5 kg of the thus obtained Co-coated maghemite particles were charged into an edge runner "MPUV-2 Model" (manufactured by Matsumoto Chuzo Tekkosho Co., Ltd.), and compacted and pulverized at a linear load of 60 kg/cm for 60 minutes.

Various properties of the obtained Co-coated maghemite particles are shown in Table 6.

Examples 21 to 42 and Comparative Examples 10 to 18:

The same procedure as defined in Example 2 was conducted except that kind of magnetic particles and amount of abrasives added were changed variously, thereby obtaining magnetic recording media.

Main production conditions and various properties of the obtained magnetic recording media are shown in Tables 7 and 9.

Table 1

| Core particles | Kind of magnetic particles | Properties of magnetic particles |
|---|---|---|
| | | Particle shape |
| Core particles 1 | Acicular magnetic metal particles containing iron as a main component (Al content: 2.71 wt. %) (Co content: 5.78 wt. %) | Spindle-shaped |
| Core particles 2 | Co-coated magnetite particles (Co content: 4.72 wt. %) ($Fe^{2+}$ content: 15.6 wt. %) | Spindle-shaped |
| Core particles 3 | Co-coated maghemite particles (Co content: 2.74 wt. %) | Acicular |

Table 1 (continued)

| Core particles | Properties of magnetic particles | | |
| :---: | :---: | :---: | :---: |
| | Average major axial diameter (µm) | Average minor axial diameter (µm) | Aspect ratio (-) |
| Core particles 1 | 0.126 | 0.0176 | 7.2:1 |
| Core particles 2 | 0.151 | 0.0220 | 6.9:1 |
| Core particles 3 | 0.275 | 0.0334 | 8.2:1 |

Table 1 (continued)

| Core particles | Properties of magnetic particles | | |
|---|---|---|---|
| | Geometrical standard deviation value (-) | BET specific surface area (m$^2$/g) | Volume resistivity value ($\Omega \cdot$ cm) |
| Core particles 1 | 1.39 | 53.5 | $5.3 \times 10^5$ |
| Core particles 2 | 1.43 | 52.6 | $6.2 \times 10^6$ |
| Core particles 3 | 1.41 | 36.1 | $8.3 \times 10^6$ |

Table 1 (continued)

| Core particles | Properties of magnetic particles | | | |
| --- | --- | --- | --- | --- |
| | Coercive force value | | Saturation magnetization value | |
| | (kA/m) | (Oe) | $(Am^2/kg)$ | (emu/g) |
| Core particles 1 | 152.6 | 1,918 | 136.1 | 136.1 |
| Core particles 2 | 72.6 | 912 | 81.0 | 81.0 |
| Core particles 3 | 54.7 | 687 | 77.1 | 77.1 |

Table 2

| Core particles | Kind of core particles | Surface-treatment step | | |
|---|---|---|---|---|
| | | Additive | | |
| | | Kind | Calculated as | Amount (wt. %) |
| Core particles 4 | Core particles 1 | Sodium aluminate | Al | 1.0 |
| Core particles 5 | Core particles 2 | Water glass #3 | $SiO_2$ | 0.50 |
| Core particles 6 | Core particles 3 | Aluminum sulfate | Al | 2.0 |
| | | Water glass #3 | $SiO_2$ | 0.5 |

Table 2 (continued)

| Core particles | Surface-treatment step | | |
|---|---|---|---|
| | Coating material | | |
| | Kind | Calculated as | Amount (wt. %) |
| Core particles 4 | A | Al | 0.99 |
| Core particles 5 | S | $SiO_2$ | 0.49 |
| Core particles 6 | A | Al | 1.93 |
| | S | $SiO_2$ | 0.47 |

Table 3

| Core particles | Properties of surface-treated magnetic particles | | |
|---|---|---|---|
| | Average major axial diameter (μm) | Average minor axial diameter (μm) | Aspect ratio (-) |
| Core particles 4 | 0.127 | 0.0178 | 7.1:1 |
| Core particles 5 | 0.151 | 0.0221 | 6.8:1 |
| Core particles 6 | 0.275 | 0.0335 | 8.2:1 |

Table 3 (continued)

| Core particles | Properties of surface-treated magnetic particles | | |
| --- | --- | --- | --- |
| | Geometrical standard deviation value (-) | BET specific surface area (m$^2$/g) | Volume resistivity value ($\Omega \cdot$ cm) |
| Core particles 4 | 1.39 | 53.3 | $5.6 \times 10^5$ |
| Core particles 5 | 1.43 | 53.6 | $8.3 \times 10^6$ |
| Core particles 6 | 1.40 | 36.5 | $9.6 \times 10^6$ |

Table 3 (continued)

| Core particles | Properties of surface-treated magnetic particles | | | |
|---|---|---|---|---|
| | Coercive force value | | Saturation magnetization value | |
| | (kA/m) | (Oe) | (Am$^2$/kg) | (emu/g) |
| Core particles 4 | 150.5 | 1,891 | 130.6 | 130.6 |
| Core particles 5 | 72.1 | 906 | 80.1 | 80.1 |
| Core particles 6 | 54.1 | 680 | 76.1 | 76.1 |

Table 4

| Inorganic fine particles | Kind of inorganic fine particles |
|---|---|
| Alumina fine particles | Alumina sol ($Al_2O_3$ concentration: 20%; produced by Nissan Kagaku Kogyo Co., Ltd.) |
| Titania fine particles | STS-01 ($TiO_2$ concentration: 30%; produced by Ishihara Sangyo Co., Ltd.) |
| Zirconia fine particles | NZS-30A ($ZrO_2$ concentration: 30%; produced by Nissan Kagaku Kogyo Co., Ltd.) |
| Ceria fine particles | Ceria sol ($CeO_2$ concentration: 20%; produced by Nissan Kagaku Kogyo Co., Ltd.) |
| Silica fine particles | SNOWTEX-XS ($SiO_2$ concentration: 20%; produced by Nissan Kagaku Kogyo Co., Ltd.) |
| Aluminum nitride fine particles | (AlN concentration: 20%) |
| Silicon carbide fine particles | (SiC concentration: 20%) |
| Molybdenum disulfide fine particles | ($MoS_2$ concentration: 20%) |

Table 4 (continued)

| Inorganic fine particles | Properties of inorganic fine particles | | |
| --- | --- | --- | --- |
| | Particle shape | Average particle size (μm) | Geometrical standard deviation value (-) |
| Alumina fine particles | Granular | 0.012 | 2.56 |
| Titania fine particles | Granular | 0.007 | 1.56 |
| Zirconia fine particles | Granular | 0.070 | 1.63 |
| Ceria fine particles | Granular | 0.010 | 1.46 |
| Silica fine particles | Granular | 0.005 | 1.46 |
| Aluminum nitride fine particles | Granular | 0.024 | 1.68 |
| Silicon carbide fine particles | Granular | 0.018 | 1.53 |
| Molybdenum disulfide fine particles | Granular | 0.038 | 1.71 |

Table 5

| Examples and Comparative Examples | Kind of core particles | Production of magnetic composite particles | |
|---|---|---|---|
| | | Adhesion with inorganic fine particles | |
| | | Colloid solution | |
| | | Kind | Amount added (part by weight) |
| Example 3 | Core particles 1 | Alumina fine particles | 5.0 |
| Example 4 | Core particles 1 | Titania fine particles | 2.0 |
| Example 5 | Core particles 1 | Zirconia fine particles | 1.0 |
| Example 6 | Core particles 1 | Ceria fine particles | 10.0 |
| Example 7 | Core particles 2 | Alumina fine particles | 3.0 |
| Example 8 | Core particles 2 | Zirconia fine particles | 15.0 |
| Example 9 | Core particles 3 | Silica fine particles | 5.0 |
| Example 10 | Core particles 4 | Ceria fine particles | 2.0 |
| Example 11 | Core particles 5 | Alumina fine particles | 5.0 |
| | | Zirconia fine particles | 1.0 |
| Example 12 | Core particles 6 | Alumina fine particles | 3.0 |
| | | Ceria fine particles | 2.0 |
| Comparative Example 1 | Core particles 1 | - | - |
| Comparative Example 2 | Core particles 1 | Alumina fine particles | 5.0 |
| Comparative Example 3 | Core particles 1 | Alumina fine particles | 5.0 |
| Comparative Example 4 | Core particles 1 | Alumina fine particles | 0.005 |
| Comparative Example 5 | Core particles 3 | Silica fine particles | 5.0 |

Table 5 (continued)

| Examples and Comparative Examples | Production of magnetic composite particles | | | | |
|---|---|---|---|---|---|
| | Adhesion with inorganic fine particles | | | | |
| | Edge runner treatment | | | Amount adhered | |
| | Linear load | | Time | Calculated | Amount |
| | (N/cm) | (Kg/cm) | (min.) | as | (wt. %) |
| Example 3 | 294 | 30 | 20 | $Al_2O_3$ | 0.96 |
| Example 4 | 245 | 25 | 30 | $TiO_2$ | 0.57 |
| Example 5 | 245 | 25 | 20 | $ZrO_2$ | 0.26 |
| Example 6 | 294 | 30 | 20 | $CeO_2$ | 1.89 |
| Example 7 | 196 | 20 | 30 | $Al_2O_3$ | 0.58 |
| Example 8 | 588 | 60 | 30 | $ZrO_2$ | 4.29 |
| Example 9 | 441 | 45 | 30 | $SiO_2$ | 0.97 |
| Example 10 | 294 | 30 | 20 | $CeO_2$ | 0.38 |
| Example 11 | 588 | 60 | 30 | $Al_2O_3$ | 0.97 |
| | | | | $ZrO_2$ | 0.26 |
| Example 12 | 588 | 60 | 30 | $Al_2O_3$ | 0.57 |
| | | | | $CeO_2$ | 0.36 |
| Comparative Example 1 | - | - | - | - | - |
| Comparative Example 2 | 294 | 30 | 20 | $Al_2O_3$ | 0.95 |
| Comparative Example 3 | 294 | 30 | 20 | $Al_2O_3$ | 0.96 |
| Comparative Example 4 | 294 | 30 | 20 | $Al_2O_3$ | $9 \times 10^{-4}$ |
| Comparative Example 5 | 294 | 30 | 20 | $SiO_2$ | 0.96 |

Table 5 (continued)

| Examples and Comparative Examples | Production of magnetic composite particles | |
|---|---|---|
| | Coating with tetraalkoxysilane | |
| | Tetraalkoxysilane | |
| | Kind | Amount added (part by weight) |
| Example 3 | Tetraethoxysilane | 1.0 |
| Example 4 | Tetraethoxysilane | 0.5 |
| Example 5 | Tetramethoxysilane | 2.0 |
| Example 6 | Tetraethoxysilane | 1.0 |
| Example 7 | Tetraethoxysilane | 3.0 |
| Example 8 | Tetraethoxysilane | 5.0 |
| Example 9 | Tetraethoxysilane | 1.0 |
| Example 10 | Tetraethoxysilane | 0.3 |
| Example 11 | Tetraethoxysilane | 1.0 |
| Example 12 | Tetraethoxysilane | 2.0 |
| Comparative Example 1 | Tetraethoxysilane | 2.0 |
| Comparative Example 2 | − | − |
| Comparative Example 3 | Tetraethoxysilane | 0.005 |
| Comparative Example 4 | Tetraethoxysilane | 1.0 |
| Comparative Example 5 | Methyl hydrogenpolysiloxane | 1.0 |

Table 5 (continued)

| Examples and Comparative Examples | Production of magnetic composite particles | | | |
|---|---|---|---|---|
| | Coating with tetraalkoxysilane | | | |
| | Edge runner treatment | | | Coating amount (calculated as Si) (wt. %) |
| | Linear load | | Time (min.) | |
| | (N/cm) | (Kg/cm) | | |
| Example 3 | 294 | 30 | 20 | 0.132 |
| Example 4 | 294 | 30 | 20 | 0.065 |
| Example 5 | 294 | 30 | 20 | 0.361 |
| Example 6 | 196 | 20 | 30 | 0.131 |
| Example 7 | 294 | 30 | 30 | 0.391 |
| Example 8 | 441 | 45 | 20 | 0.640 |
| Example 9 | 558 | 60 | 30 | 0.132 |
| Example 10 | 196 | 20 | 20 | 0.039 |
| Example 11 | 441 | 45 | 30 | 0.132 |
| Example 12 | 294 | 30 | 30 | 0.250 |
| Comparative Example 1 | 294 | 30 | 30 | 0.240 |
| Comparative Example 2 | | — | — | — |
| Comparative Example 3 | 294 | 30 | 30 | $6 \times 10^{-4}$ |
| Comparative Example 4 | 294 | 30 | 30 | 0.131 |
| Comparative Example 5 | 294 | 30 | 30 | 0.428 |

31

Table 6

| Examples and Comparative Examples | Properties of magnetic composite particles | | | |
|---|---|---|---|---|
| | Average major axial diameter (μm) | Average minor axial diameter (μm) | Aspect ratio (-) | Geometrical standard deviation value (-) |
| Example 3 | 0.127 | 0.0176 | 7.2:1 | 1.39 |
| Example 4 | 0.126 | 0.0177 | 7.1:1 | 1.39 |
| Example 5 | 0.126 | 0.0176 | 7.2:1 | 1.39 |
| Example 6 | 0.127 | 0.0177 | 7.2:1 | 1.39 |
| Example 7 | 0.151 | 0.0221 | 6.8:1 | 1.44 |
| Example 8 | 0.152 | 0.0221 | 6.9:1 | 1.43 |
| Example 9 | 0.276 | 0.0335 | 8.2:1 | 1.41 |
| Example 10 | 0.127 | 0.0179 | 7.1:1 | 1.39 |
| Example 11 | 0.151 | 0.0222 | 6.8:1 | 1.44 |
| Example 12 | 0.275 | 0.0336 | 8.2:1 | 1.41 |
| Comparative Example 1 | 0.126 | 0.0176 | 7.2:1 | 1.39 |
| Comparative Example 2 | 0.126 | 0.0175 | 7.2:1 | 1.40 |
| Comparative Example 3 | 0.126 | 0.0176 | 7.2:1 | 1.39 |
| Comparative Example 4 | 0.126 | 0.0176 | 7.2:1 | 1.39 |
| Comparative Example 5 | 0.276 | 0.0335 | 8.2:1 | 1.41 |
| Comparative Example 6 | 0.275 | 0.0335 | 8.2:1 | 1.41 |

Table 6 (continued)

| Examples and Comparative Examples | Properties of magnetic composite particles | | | |
|---|---|---|---|---|
| | BET specific surface area value $(m^2/g)$ | Volume resistivity value $(\Omega \cdot cm)$ | Coercive force value | |
| | | | $(kA/m)$ | $(Oe)$ |
| Example 3 | 54.6 | $6.3 \times 10^6$ | 149.8 | 1,883 |
| Example 4 | 53.9 | $3.8 \times 10^6$ | 149.0 | 1,872 |
| Example 5 | 55.8 | $2.6 \times 10^6$ | 150.5 | 1,891 |
| Example 6 | 54.6 | $6.8 \times 10^6$ | 151.3 | 1,901 |
| Example 7 | 53.1 | $3.4 \times 10^7$ | 71.3 | 896 |
| Example 8 | 54.1 | $2.7 \times 10^7$ | 71.1 | 893 |
| Example 9 | 36.8 | $2.6 \times 10^7$ | 54.3 | 682 |
| Example 10 | 55.6 | $3.8 \times 10^6$ | 150.9 | 1,896 |
| Example 11 | 52.8 | $6.2 \times 10^7$ | 70.9 | 891 |
| Example 12 | 37.1 | $6.3 \times 10^7$ | 54.0 | 679 |
| Comparative Example 1 | 53.8 | $3.8 \times 10^6$ | 151.7 | 1,906 |
| Comparative Example 2 | 54.3 | $6.5 \times 10^6$ | 151.2 | 1,900 |
| Comparative Example 3 | 54.6 | $6.3 \times 10^6$ | 151.0 | 1,897 |
| Comparative Example 4 | 54.1 | $5.2 \times 10^6$ | 150.9 | 1,893 |
| Comparative Example 5 | 36.5 | $8.9 \times 10^9$ | 53.9 | 677 |
| Comparative Example 6 | 36.2 | $4.8 \times 10^7$ | 54.4 | 683 |

Table 6 (continued)

| Examples and Comparative Examples | Properties of magnetic composite particles | | Desorption percentage of inorganic fine particles (%) |
|---|---|---|---|
| | Saturation magnetization value | | |
| | (Am$^2$/kg) | (emu/g) | |
| Example 3 | 132.9 | 132.9 | 6.6 |
| Example 4 | 132.8 | 132.8 | 5.2 |
| Example 5 | 133.1 | 133.1 | 8.1 |
| Example 6 | 134.6 | 134.6 | 7.2 |
| Example 7 | 80.1 | 80.1 | 9.0 |
| Example 8 | 79.6 | 79.6 | 7.4 |
| Example 9 | 76.5 | 76.5 | 5.6 |
| Example 10 | 134.1 | 134.1 | 4.3 |
| Example 11 | 79.9 | 79.9 | 2.1 |
| Example 12 | 76.9 | 76.9 | 1.8 |
| Comparative Example 1 | 135.4 | 135.4 | – |
| Comparative Example 2 | 135.6 | 135.6 | 71.2 |
| Comparative Example 3 | 134.4 | 134.4 | 58.7 |
| Comparative Example 4 | 133.9 | 133.9 | – |
| Comparative Example 5 | 76.3 | 76.3 | 8.8 |
| Comparative Example 6 | 76.8 | 76.8 | 18.4 |

Table 7

| Examples and Comparative Examples | Kind of core particles | Production of magnetic composite particles | |
|---|---|---|---|
| | | Adhesion with inorganic fine particles | |
| | | Colloid solution | |
| | | Kind | Amount added (part by weight) |
| Example 13 | Core particles 1 | Aluminum nitride fine particles | 5.0 |
| Example 14 | Core particles 1 | Silicon carbide fine particles | 2.0 |
| Example 15 | Core particles 1 | Molybdenum disulfide fine particles | 1.0 |
| Example 16 | Core particles 2 | Aluminum nitride fine particles | 5.0 |
| Example 17 | Core particles 3 | Silicon carbide fine particles | 4.0 |
| Example 18 | Core particles 4 | Molybdenum disulfide fine particles | 3.0 |
| Example 19 | Core particles 5 | Aluminum nitride fine particles | 2.0 |
| Example 20 | Core particles 6 | Silicon carbide fine particles | 2.0 |
| Comparative Example 7 | Core particles 1 | Aluminum nitride fine particles | 5.0 |
| Comparative Example 8 | Core particles 1 | Aluminum nitride fine particles | 5.0 |
| Comparative Example 9 | Core particles 1 | Aluminum nitride fine particles | 0.005 |

Table 7 (continued)

| Examples and Comparative Examples | Production of magnetic composite particles | | | | |
|---|---|---|---|---|---|
| | Adhesion with inorganic fine particles | | | | |
| | Edge runner treatment | | | Amount adhered | |
| | Linear load | | Time | Calculated | Amount |
| | (N/cm) | (Kg/cm) | (min.) | as | (wt. %) |
| Example 13 | 294 | 30 | 30 | AlN | 0.96 |
| Example 14 | 245 | 25 | 30 | SiC | 0.39 |
| Example 15 | 196 | 20 | 20 | $MoS_2$ | 0.19 |
| Example 16 | 441 | 45 | 20 | AlN | 0.98 |
| Example 17 | 588 | 60 | 30 | SiC | 0.76 |
| Example 18 | 294 | 30 | 30 | $MoS_2$ | 0.55 |
| Example 19 | 245 | 25 | 30 | AlN | 0.38 |
| Example 20 | 196 | 20 | 20 | SiC | 0.40 |
| Comparative Example 7 | 294 | 30 | 20 | AlN | 0.96 |
| Comparative Example 8 | 294 | 30 | 20 | AlN | 0.95 |
| Comparative Example 9 | 294 | 30 | 20 | AlN | $9 \times 10^{-4}$ |

Table 7 (continued)

| Examples and Comparative Examples | Production of magnetic composite particles | |
|---|---|---|
| | Coating with tetraalkoxysilane | |
| | Tetraalkoxysilane | |
| | Kind | Amount added (part by weight) |
| Example 13 | Tetraethoxysilane | 1.0 |
| Example 14 | Tetraethoxysilane | 0.5 |
| Example 15 | Tetramethoxysilane | 2.0 |
| Example 16 | Tetraethoxysilane | 1.0 |
| Example 17 | Tetraethoxysilane | 3.0 |
| Example 18 | Tetraethoxysilane | 5.0 |
| Example 19 | Tetraethoxysilane | 1.0 |
| Example 20 | Tetraethoxysilane | 0.3 |
| Comparative Example 7 | − | − |
| Comparative Example 8 | Tetraethoxysilane | 0.005 |
| Comparative Example 9 | Tetraethoxysilane | 1.0 |

Table 7 (continued)

| Examples and Comparative Examples | Production of magnetic composite particles | | | |
|---|---|---|---|---|
| | Coating with tetraalkoxysilane | | | |
| | Edge runner treatment | | | Coating amount (calculated as Si) (wt. %) |
| | Linear load | | Time (min.) | |
| | (N/cm) | (Kg/cm) | | |
| Example 13 | 294 | 30 | 30 | 0.131 |
| Example 14 | 245 | 25 | 30 | 0.066 |
| Example 15 | 196 | 20 | 30 | 0.360 |
| Example 16 | 588 | 60 | 20 | 0.129 |
| Example 17 | 441 | 45 | 20 | 0.393 |
| Example 18 | 294 | 30 | 30 | 0.638 |
| Example 19 | 245 | 25 | 30 | 0.135 |
| Example 20 | 196 | 20 | 30 | 0.041 |
| Comparative Example 7 | – | – | – | – |
| Comparative Example 8 | 294 | 30 | 30 | $6 \times 10^{-4}$ |
| Comparative Example 9 | 294 | 30 | 30 | 0.131 |

Table 8

| Examples and Comparative Examples | Properties of magnetic composite particles | | | |
|---|---|---|---|---|
| | Average major axial diameter (μm) | Average minor axial diameter (μm) | Aspect ratio (-) | Geometrical standard deviation value (-) |
| Example 13 | 0.126 | 0.0177 | 7.1:1 | 1.39 |
| Example 14 | 0.126 | 0.0176 | 7.2:1 | 1.39 |
| Example 15 | 0.126 | 0.0176 | 7.2:1 | 1.39 |
| Example 16 | 0.151 | 0.0221 | 6.8:1 | 1.44 |
| Example 17 | 0.276 | 0.0334 | 8.3:1 | 1.41 |
| Example 18 | 0.127 | 0.0179 | 7.1:1 | 1.39 |
| Example 19 | 0.152 | 0.0221 | 6.9:1 | 1.44 |
| Example 20 | 0.276 | 0.0335 | 8.2:1 | 1.41 |
| Comparative Example 7 | 0.126 | 0.0176 | 7.2:1 | 1.39 |
| Comparative Example 8 | 0.127 | 0.0176 | 7.2:1 | 1.39 |
| Comparative Example 9 | 0.126 | 0.0176 | 7.2:1 | 1.39 |

Table 8 (continued)

| Examples and Comparative Examples | Properties of magnetic composite particles | | | |
|---|---|---|---|---|
| | BET specific surface area value (m²/g) | Volume resistivity value (Ω·cm) | Coercive force value | |
| | | | (kA/m) | (Oe) |
| Example 13 | 55.5 | $3.8 \times 10^6$ | 149.6 | 1,880 |
| Example 14 | 54.2 | $2.9 \times 10^6$ | 149.7 | 1,881 |
| Example 15 | 56.1 | $4.8 \times 10^6$ | 150.1 | 1,886 |
| Example 16 | 53.9 | $3.9 \times 10^7$ | 71.1 | 893 |
| Example 17 | 37.1 | $5.1 \times 10^7$ | 54.4 | 683 |
| Example 18 | 55.5 | $8.3 \times 10^6$ | 149.0 | 1,872 |
| Example 19 | 52.9 | $6.9 \times 10^7$ | 70.0 | 879 |
| Example 20 | 38.1 | $7.3 \times 10^7$ | 54.1 | 680 |
| Comparative Example 7 | 54.4 | $8.3 \times 10^6$ | 150.2 | 1,887 |
| Comparative Example 8 | 54.8 | $6.1 \times 10^6$ | 148.3 | 1,864 |
| Comparative Example 9 | 54.3 | $5.9 \times 10^6$ | 148.7 | 1,869 |

Table 8 (continued)

| Examples and Comparative Examples | Properties of magnetic composite particles | | Desorption percentage of inorganic fine particles (%) |
|---|---|---|---|
| | Saturation magnetization value | | |
| | $(Am^2/kg)$ | (emu/g) | |
| Example 13 | 132.6 | 132.6 | 9.3 |
| Example 14 | 132.6 | 132.6 | 8.6 |
| Example 15 | 133.1 | 133.1 | 8.9 |
| Example 16 | 79.6 | 79.6 | 6.9 |
| Example 17 | 76.9 | 76.9 | 7.5 |
| Example 18 | 129.9 | 129.9 | 2.9 |
| Example 19 | 78.8 | 78.8 | 4.6 |
| Example 20 | 75.3 | 75.3 | 4.6 |
| Comparative Example 7 | 133.8 | 133.8 | 66.6 |
| Comparative Example 8 | 133.2 | 133.2 | 59.3 |
| Comparative Example 9 | 133.9 | 133.9 | - |

Table 9

| Examples and Comparative Examples | Production of magnetic coating composition | | | Properties of magnetic coating composition |
|---|---|---|---|---|
| | Kind of magnetic particles | Weight ratio of particles to resin (-) | Amount of abrasive added (part by weight) | Viscosity (cP) |
| Example 21 | Example 3 | 5.0:1 | 7.0 | 5,120 |
| Example 22 | Example 4 | 5.0:1 | 7.0 | 4,992 |
| Example 23 | Example 5 | 5.0:1 | 7.0 | 4,838 |
| Example 24 | Example 6 | 5.0:1 | 7.0 | 4,582 |
| Example 25 | Example 7 | 5.0:1 | 7.0 | 2,688 |
| Example 26 | Example 8 | 5.0:1 | 7.0 | 3,148 |
| Example 27 | Example 9 | 5.0:1 | 7.0 | 2,304 |
| Example 28 | Example 10 | 5.0:1 | 7.0 | 4,557 |
| Example 29 | Example 11 | 5.0:1 | 7.0 | 2,688 |
| Example 30 | Example 12 | 5.0:1 | 7.0 | 2,048 |
| Example 31 | Example 6 | 5.0:1 | 5.0 | 4,352 |
| Example 32 | Example 8 | 5.0:1 | 3.0 | 2,816 |
| Comparative Example 10 | Comparative Example 1 | 5.0:1 | 7.0 | 6,400 |
| Comparative Example 11 | Comparative Example 2 | 5.0:1 | 7.0 | 7,040 |
| Comparative Example 12 | Comparative Example 3 | 5.0:1 | 7.0 | 6,861 |
| Comparative Example 13 | Comparative Example 4 | 5.0:1 | 7.0 | 7,245 |
| Comparative Example 14 | Comparative Example 5 | 5.0:1 | 7.0 | 2,401 |
| Comparative Example 15 | Comparative Example 6 | 5.0:1 | 7.0 | 3,072 |

Table 9 (continued)

| Examples and Comparative Examples | Properties of magnetic recording medium | | | |
|---|---|---|---|---|
| | Thickness of magnetic layer (μm) | Coercive force value | | Squareness (Br/Bm) |
| | | (kA/m) | (Oe) | |
| Example 21 | 3.5 | 156.1 | 1,961 | 0.88 |
| Example 22 | 3.6 | 155.8 | 1,958 | 0.88 |
| Example 23 | 3.5 | 155.5 | 1,954 | 0.89 |
| Example 24 | 3.5 | 156.2 | 1,963 | 0.89 |
| Example 25 | 3.6 | 74.9 | 941 | 0.89 |
| Example 26 | 3.5 | 75.3 | 946 | 0.90 |
| Example 27 | 3.6 | 59.1 | 743 | 0.91 |
| Example 28 | 3.5 | 155.7 | 1,956 | 0.89 |
| Example 29 | 3.6 | 74.6 | 938 | 0.89 |
| Example 30 | 3.5 | 58.6 | 736 | 0.91 |
| Example 31 | 3.5 | 156.5 | 1,966 | 0.89 |
| Example 32 | 3.5 | 75.4 | 948 | 0.91 |
| Comparative Example 10 | 3.7 | 154.5 | 1,941 | 0.83 |
| Comparative Example 11 | 3.6 | 154.9 | 1,946 | 0.84 |
| Comparative Example 12 | 3.6 | 155.2 | 1,950 | 0.85 |
| Comparative Example 13 | 3.7 | 155.4 | 1,953 | 0.85 |
| Comparative Example 14 | 3.5 | 58.5 | 735 | 0.87 |
| Comparative Example 15 | 3.5 | 58.6 | 736 | 0.87 |

Table 9 (continued)

| Examples and Comparative Examples | Properties of magnetic recording medium | | |
|---|---|---|---|
| | Gloss (%) | Surface roughness Ra (nm) | Young's modulus (relative value) |
| Example 21 | 235 | 6.8 | 138 |
| Example 22 | 241 | 6.2 | 138 |
| Example 23 | 235 | 6.6 | 135 |
| Example 24 | 238 | 6.0 | 136 |
| Example 25 | 191 | 5.6 | 141 |
| Example 26 | 194 | 6.1 | 139 |
| Example 27 | 175 | 7.2 | 144 |
| Example 28 | 243 | 5.8 | 141 |
| Example 29 | 193 | 5.6 | 143 |
| Example 30 | 178 | 6.8 | 145 |
| Example 31 | 241 | 5.8 | 135 |
| Example 32 | 198 | 5.8 | 137 |
| Comparative Example 10 | 166 | 24.2 | 108 |
| Comparative Example 11 | 178 | 21.6 | 121 |
| Comparative Example 12 | 189 | 20.0 | 123 |
| Comparative Example 13 | 186 | 18.6 | 110 |
| Comparative Example 14 | 172 | 7.3 | 139 |
| Comparative Example 15 | 168 | 8.3 | 133 |

## Table 9 (continued)

| Examples and Comparative Examples | Properties of magnetic recording medium | | |
|---|---|---|---|
| | Surface resistivity value ($\Omega/cm^2$) | Durability | |
| | | Durability time (min.) | Head cleaning property (−) |
| Example 21 | $1.6 \times 10^9$ | 27.3 | A |
| Example 22 | $3.2 \times 10^9$ | 25.3 | B |
| Example 23 | $4.8 \times 10^9$ | 29.6 | A |
| Example 24 | $5.6 \times 10^9$ | ≥30 | A |
| Example 25 | $7.6 \times 10^9$ | 28.6 | A |
| Example 26 | $1.0 \times 10^9$ | 29.5 | A |
| Example 27 | $1.3 \times 10^9$ | 28.3 | B |
| Example 28 | $2.6 \times 10^9$ | ≥30 | A |
| Example 29 | $9.8 \times 10^9$ | ≥30 | A |
| Example 30 | $2.6 \times 10^9$ | ≥30 | A |
| Example 31 | $4.1 \times 10^9$ | 27.8 | B |
| Example 32 | $5.3 \times 10^9$ | 25.1 | A |
| Comparative Example 10 | $6.3 \times 10^9$ | 11.6 | D |
| Comparative Example 11 | $3.8 \times 10^9$ | 17.6 | C |
| Comparative Example 12 | $2.6 \times 10^9$ | 16.2 | C |
| Comparative Example 13 | $1.9 \times 10^9$ | 12.3 | D |
| Comparative Example 14 | $4.2 \times 10^{11}$ | 27.2 | B |
| Comparative Example 15 | $2.8 \times 10^9$ | 18.8 | C |

<u>Table 10</u>

| Examples and Comparative Examples | Production of magnetic coating composition | | | Properties of magnetic coating composition |
|---|---|---|---|---|
| | Kind of magnetic particles | Weight ratio of particles to resin (-) | Amount of abrasive added (part by weight) | Viscosity (cP) |
| Example 33 | Example 13 | 5.0:1 | 7.0 | 4,562 |
| Example 34 | Example 14 | 5.0:1 | 7.0 | 4,853 |
| Example 35 | Example 15 | 5.0:1 | 7.0 | 5,260 |
| Example 36 | Example 16 | 5.0:1 | 7.0 | 2,713 |
| Example 37 | Example 17 | 5.0:1 | 7.0 | 2,304 |
| Example 38 | Example 18 | 5.0:1 | 7.0 | 4,568 |
| Example 39 | Example 19 | 5.0:1 | 7.0 | 2,736 |
| Example 40 | Example 20 | 5.0:1 | 7.0 | 2,260 |
| Example 41 | Example 13 | 5.0:1 | 5.0 | 4,555 |
| Example 42 | Example 16 | 5.0:1 | 3.0 | 2,830 |
| Comparative Example 16 | Comparative Example 6 | 5.0:1 | 7.0 | 7,016 |
| Comparative Example 17 | Comparative Example 7 | 5.0:1 | 7.0 | 6,833 |
| Comparative Example 18 | Comparative Example 8 | 5.0:1 | 7.0 | 6,325 |

Table 10 (continued)

| Examples and Comparative Examples | Properties of magnetic recording medium | | | |
|---|---|---|---|---|
| | Thickness of magnetic layer (μm) | Coercive force value | | Squareness (Br/Bm) |
| | | (kA/m) | (Oe) | |
| Example 33 | 3.5 | 157.8 | 1,983 | 0.88 |
| Example 34 | 3.5 | 157.3 | 1,976 | 0.88 |
| Example 35 | 3.5 | 156.5 | 1,966 | 0.88 |
| Example 36 | 3.6 | 74.6 | 938 | 0.89 |
| Example 37 | 3.4 | 58.9 | 740 | 0.89 |
| Example 38 | 3.4 | 154.4 | 1,940 | 0.88 |
| Example 39 | 3.4 | 74.7 | 939 | 0.89 |
| Example 40 | 3.4 | 58.3 | 732 | 0.89 |
| Example 41 | 3.4 | 156.9 | 1,971 | 0.89 |
| Example 42 | 3.4 | 75.3 | 946 | 0.89 |
| Comparative Example 16 | 3.6 | 155.3 | 1,951 | 0.84 |
| Comparative Example 17 | 3.5 | 155.1 | 1,949 | 0.85 |
| Comparative Example 18 | 3.5 | 155.7 | 1,956 | 0.85 |

Table 10 (continued)

| Examples and Comparative Examples | Properties of magnetic recording medium | | |
|---|---|---|---|
| | Gloss (%) | Surface roughness Ra (nm) | Young's modulus (relative value) |
| Example 33 | 236 | 6.9 | 138 |
| Example 34 | 238 | 6.5 | 138 |
| Example 35 | 235 | 6.6 | 138 |
| Example 36 | 193 | 6.2 | 140 |
| Example 37 | 181 | 6.8 | 143 |
| Example 38 | 239 | 6.3 | 137 |
| Example 39 | 195 | 6.0 | 139 |
| Example 40 | 187 | 6.0 | 143 |
| Example 41 | 240 | 7.3 | 138 |
| Example 42 | 195 | 6.3 | 140 |
| Comparative Example 16 | 176 | 21.6 | 119 |
| Comparative Example 17 | 183 | 19.8 | 120 |
| Comparative Example 18 | 183 | 19.6 | 113 |

Table 10 (continued)

| Examples and Comparative Examples | Properties of magnetic recording medium | | |
|---|---|---|---|
| | Surface resistivity value ($\Omega$/cm$^2$) | Durability | |
| | | Durability time (min.) | Head cleaning property (-) |
| Example 33 | $2.3 \times 10^9$ | 29.3 | A |
| Example 34 | $1.8 \times 10^9$ | 27.2 | A |
| Example 35 | $6.6 \times 10^9$ | 26.6 | B |
| Example 36 | $7.3 \times 10^9$ | ≥30.0 | A |
| Example 37 | $6.3 \times 10^9$ | 29.6 | A |
| Example 38 | $5.9 \times 10^9$ | ≥30.0 | A |
| Example 39 | $4.8 \times 10^9$ | ≥30.0 | A |
| Example 40 | $6.9 \times 10^9$ | ≥30.0 | A |
| Example 41 | $8.2 \times 10^9$ | 27.9 | A |
| Example 42 | $8.8 \times 10^9$ | 27.4 | B |
| Comparative Example 16 | $8.3 \times 10^9$ | 16.6 | C |
| Comparative Example 17 | $3.3 \times 10^9$ | 15.2 | C |
| Comparative Example 18 | $3.8 \times 10^9$ | 12.0 | D |

**Claims**

1.  Magnetic composite particles comprising:

(a) magnetic core particles having an average particle size of 0.01 to 0.3 μm; and
(b) from 0.1 to 20% by weight, based on the weight of said magnetic core particles, of inorganic particles which have an average particle size of 0.001 to 0.07 μm, which are fixed or anchored on the surface of each magnetic core particle through a silicon compound derivable from a tetraalkoxysilane and which comprise at least one inorganic compound selected from oxides, nitrides, carbides and sulfides containing aluminum, zirconium, cerium, titanium, silicon, boron or molybdenum.

2. Magnetic composite particles according to claim 1, wherein an undercoat comprising at least one compound selected from a hydroxide of aluminum, an oxide of aluminum, a hydroxide of silicon and an oxide of silicon is provided on the surface of each magnetic core particle.

3. Magnetic composite particles according to claim 2, wherein the undercoat is present in an amount of from 0.01 to 20 % by weight, calculated as a sum of Al and $SiO_2$, based on the weight of the magnetic core particles having the undercoat.

4. Magnetic composite particles according to any one of the preceding claims, which have an average particle size of 0.01 to 0.3 μm, a geometrical standard deviation of particle size of not more than 2.0, a BET specific surface area of 16 to 160 m$^2$/g, a coercive force value of 250 to 4,000 Oe and a saturation magnetization value of 60 to 170 emu/g.

5. Magnetic composite particles according to ay one of the preceding claims, wherein the percentage of inorganic particles which are desorbed or fallen-off from the surfaces of said magnetic composite particles is not more than 15 % by weight based on the weight of the said inorganic particles.

6. Magnetic composite particles according to any one of the preceding claims, wherein said silicon compound is produced by heat-treating said tetraalkoxysilane at a temperature of 40 to 200°C.

7. Magnetic composite particles according to any one of the preceding claims, wherein the said silicon compound is present in an amount of from 0.01 to 5.0 % by weight, calculated as Si, based on the weight of the magnetic composite particles.

8. Magnetic composite particles according to any of the preceding claims, wherein the or each said inorganic compound is selected from:

    (i) aluminum oxide, zirconium oxide, cerium oxide, titanium oxide and silicon oxide; and/or
    (ii) aluminum nitride, titanium nitride, silicon nitride, zirconium nitride, boron nitride and molybdenum nitride; and/or
    (iii) aluminum carbide, silicon carbide, zirconium carbide, titanium carbide, cerium carbide, boron carbide and molybdenum carbide; and/or
    (iv) aluminum sulfide, silicon sulfide, zirconium sulfide, titanium sulfide, and molybdenum disulfide.

9. A magnetic recording medium comprising:

    - a non-magnetic substrate; and
    - a magnetic recording layer which is provided on said non-magnetic substrate and which comprises magnetic composite particles as defined in any one of the preceding claims and a binder resin.

10. A magnetic recording medium according to claim 9, which has a coercive force value of 250 to 4,000 Oe, a squareness of 0.82 to 0.95, a gloss of 165 to 300%, a surface roughness of not more than 12.0 nm and a running durability of not less than 22 minutes.

11. A process for producing magnetic composite particles as defined in claim 1, comprising:

    (a) mixing magnetic particles having an average particle size of 0.01 to 0.3 μm with inorganic particles which have an average particle size of 0.001 to 0.07 μm and which comprise at least one inorganic compound selected from oxides, nitrides, carbides and sulfides containing aluminum, zirconium, cerium, titanium, silicon, boron or molybdenum, thereby to adhere said inorganic particles onto the surface of each magnetic particle;
    (b) adding tetraalkoxysilane to the resultant particles; and
    (c) heating the obtained mixture at a temperature of 40 to 200°C, thereby fixing or anchoring said inorganic particles onto the surface of each magnetic particle through a silicon compound derivable from said tetraalkoxysilane.

| | European Patent Office | EUROPEAN SEARCH REPORT | Application Number EP 00 30 5310 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 0 913 431 A (TODA KOGYO CORP) 6 May 1999 (1999-05-06) * page 114, line 41; claims 1,2,8,13 * --- | 1 | G11B5/712 C09C3/12 C09C1/00 C09C3/10 |
| A | EP 0 699 721 A (TODA KOGYO CORP) 6 March 1996 (1996-03-06) * claims * --- | 1-11 | |
| A | US 4 076 890 A (YAMADA YASUYUKI ET AL) 28 February 1978 (1978-02-28) * example 2 * --- | 1-11 | |
| A | PATENT ABSTRACTS OF JAPAN vol. 015, no. 107 (P-1179), 14 March 1991 (1991-03-14) & JP 03 001320 A (HITACHI MAXELL LTD), 8 January 1991 (1991-01-08) * abstract * --- | 1-11 | |
| A | PATENT ABSTRACTS OF JAPAN vol. 009, no. 321 (E-367), 17 December 1985 (1985-12-17) & JP 60 154502 A (UBE KOSAN KK), 14 August 1985 (1985-08-14) * abstract * --- | 1-11 | TECHNICAL FIELDS SEARCHED (Int.Cl.7) G11B C09C |
| A | PATENT ABSTRACTS OF JAPAN vol. 1997, no. 01, 31 January 1997 (1997-01-31) & JP 08 246002 A (MITSUBISHI MATERIALS CORP), 24 September 1996 (1996-09-24) * abstract * --- -/-- | 1-11 | |

The present search report has been drawn up for all claims

| Place of search | Date of completion of the search | Examiner |
|---|---|---|
| THE HAGUE | 6 October 2000 | Heywood, C |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## EUROPEAN SEARCH REPORT

**European Patent Office**

**Application Number**

EP 00 30 5310

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | PATENT ABSTRACTS OF JAPAN vol. 1995, no. 03, 28 April 1995 (1995-04-28) -& JP 06 338043 A (TOSHIBA CORP), 6 December 1994 (1994-12-06) * abstract * | 1-11 | |
| P,X | EP 0 936 507 A (TODA KOGYO CORP) 18 August 1999 (1999-08-18) * page 87, line 18, paragraph 1; claims 1,2,4 * | 1 | |
| P,X | EP 0 982 715 A (TODA KOGYO CORP) 1 March 2000 (2000-03-01) * claims 1,5,19,20,22 * | 1,10 | |
| P,X | EP 0 957 474 A (TODA KOGYO CORP) 17 November 1999 (1999-11-17) * paragraph '0099! – paragraph '0105!; claims 1,3,10 * | 1,10 | |
| | | | **TECHNICAL FIELDS SEARCHED** (Int.Cl.7) |

The present search report has been drawn up for all claims

| Place of search | Date of completion of the search | Examiner |
|---|---|---|
| THE HAGUE | 6 October 2000 | Heywood, C |

EPO FORM 1503 03.82 (P04C01)

**EP 1 063 639 A1**

## ANNEX TO THE EUROPEAN SEARCH REPORT
## ON EUROPEAN PATENT APPLICATION NO.

EP 00 30 5310

This annex lists the patent family members relating to the patent documents cited in the above-mentioned European search report.
The members are as contained in the European Patent Office EDP file on
The European Patent Office is in no way liable for these particulars which are merely given for the purpose of information.

06-10-2000

| Patent document cited in search report | | | Publication date | Patent family member(s) | | | Publication date |
|---|---|---|---|---|---|---|---|
| EP | 0913431 | A | 06-05-1999 | JP | 11323174 | A | 26-11-1999 |
| EP | 0699721 | A | 06-03-1996 | JP | 8120191 | A | 14-05-1996 |
| | | | | US | 5686012 | A | 11-11-1997 |
| US | 4076890 | A | 28-02-1978 | JP | 1081905 | C | 29-01-1982 |
| | | | | JP | 49059608 | A | 10-06-1974 |
| | | | | JP | 52040847 | B | 14-10-1977 |
| JP | 03001320 | A | 08-01-1991 | NONE | | | |
| JP | 60154502 | A | 14-08-1985 | NONE | | | |
| JP | 08246002 | A | 24-09-1996 | NONE | | | |
| JP | 06338043 | A | 06-12-1994 | NONE | | | |
| EP | 0936507 | A | 18-08-1999 | JP | 11305480 | A | 05-11-1999 |
| EP | 0982715 | A | 01-03-2000 | JP | 2000138115 | A | 16-05-2000 |
| EP | 0957474 | A | 17-11-1999 | JP | 2000036404 | A | 02-02-2000 |

EPO FORM P0459

For more details about this annex : see Official Journal of the European Patent Office, No. 12/82

53